(19) **Europäisches Patentamt**
**European Patent Office**
**Office européen des brevets**

(11) **EP 3 070 767 B1**

(12) **EUROPEAN PATENT SPECIFICATION**

(45) Date of publication and mention
of the grant of the patent:
**16.05.2018 Bulletin 2018/20**

(51) Int Cl.:
*H01M 4/131* (2010.01)   *H01M 4/36* (2006.01)
*H01M 4/485* (2010.01)   *H01M 4/62* (2006.01)
*H01M 4/02* (2006.01)

(21) Application number: **16158443.8**

(22) Date of filing: **03.03.2016**

(54) **ELECTRODE, NONAQUEOUS ELECTROLYTE BATTERY, AND BATTERY PACK**
ELEKTRODE, NICHT WÄSSRIGE ELEKTROLYTBATTERIE UND BATTERIEPACK
ÉLECTRODE, BATTERIE À ÉLECTROLYTE NON AQUEUX ET BLOC-BATTERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.03.2015   JP 2015056956**

(43) Date of publication of application:
**21.09.2016 Bulletin 2016/38**

(73) Proprietor: **Kabushiki Kaisha Toshiba**
**Tokyo 105-8001 (JP)**

(72) Inventors:
• **Iwasaki, Takuya**
  **Tokyo, 105-8001 (JP)**
• **Harada, Yasuhiro**
  **Tokyo, 105-8001 (JP)**
• **Takami, Norio**
  **Tokyo, 105-8001 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 784 026     EP-A1- 2 784 848**
**US-A1- 2008 166 637    US-A1- 2013 209 863**
**US-A1- 2014 120 404**

## Description

FIELD

Embodiments described herein relate to an electrode, a nonaqueous electrolyte battery, and a battery pack.

BACKGROUND

For example, a nonaqueous electrolyte secondary battery using lithium ions as a charge carrier has achieved widespread use in various fields such as electric vehicles, power storage, and information devices as a high energy-density battery. Accordingly, market requirements for the nonaqueous electrolyte secondary battery further increase and research thereon is actively conducted.

Among others, a lithium ion nonaqueous electrolyte secondary battery used as an electric source for electric vehicles is required to have a high energy density, that is, a large discharge capacity per unit weight or unit volume due to its use. Then, to regenerate kinetic energy during deceleration, the lithium ion nonaqueous electrolyte secondary battery is required to be able to efficiently charge even if a large current is instantaneously is input into the battery. Further, the lithium ion nonaqueous electrolyte secondary battery is conversely required to be able to discharge high output, that is, a large current instantaneously for starting, an abrupt start, or abrupt acceleration. That is, the secondary battery as an electric source for electric vehicles is desired, in addition to being large in capacity, to have excellent input/output characteristics in a short time.

Carbon based materials are frequently used as a negative electrode active material of the lithium ion nonaqueous electrolyte secondary battery. In recent years, on the other hand, spinel type lithium titanate having a higher Li occlusion/emission potential than carbon based materials has attracted attention. The spinel type lithium titanate does not change in volume accompanying a charge and discharge reaction and so is excellent in cycle characteristics. In addition, the spinel type lithium titanate is highly safe because of a lower probability of lithium dendrite being generated than when a carbon based material is used and has a great advantage of being less likely to cause thermal runaway due to ceramic properties.

In a nonaqueous electrolyte battery using the spinel type lithium titanate as a negative electrode active material, on the other hand, a problem of low energy densities is posed and a negative electrode material capable of providing a higher capacity is needed. Therefore, research on niobium-titanium composite oxide such as $Nb_2TiO_7$ whose theoretical capacity per weight is larger than that of the spinel type lithium titanate $Li_4Ti_5O_{12}$ is conducted.

US 2014/120404 A1 relates to an active material containing a niobium titanium composite oxidehaving average composition represented by $LiNb_{2+x}Ti_{1-x}O_{7+0.5x}$ ($0 \le x \le 0.5$, $0 \le y \le 5.5$). The niobium titanium composite oxide satisfies peak intensity ratios represented by the following formulae: $0.05 \le (B/A) \le 0.7$; $0.01 \le (C/A) \le 0.2$; $0 \le (D/A) \le 0.1$

US 2008/166637 A1 relates to a nonaqueous electrolyte battery including a positive electrode, a negative electrode and a nonaqueous electrolyte, wherein the negative electrode contains a titanium-containing oxide, and the nonaqueous electrolyte contains a compound having a silyl-type functional group and a sultone having an unsaturated hydrocarbon group.

BRIEF DESCRIPTION OF THE DRAWINGS

FIG. 1 shows a schematic sectional view of an exemplary electrode according to a first embodiment;
FIG. 2 shows a schematic sectional view of an exemplary nonaqueous electrolyte battery according to a second embodiment;
FIG. 3 shows an enlarged sectional view of an A portion in FIG. 2;
FIG. 4 shows a schematic view showing the neighborhood of boundaries of a positive electrode, a separator, and a negative electrode in the nonaqueous electrolyte battery in FIG. 2;
FIG. 5 shows a partially notched perspective view of another exemplary nonaqueous electrolyte battery according to the second embodiment;
FIG. 6 shows an enlarged sectional view of a B portion in FIG. 5;
FIG. 7 shows a schematic perspective view of an exemplary electrode group that can be included in the nonaqueous electrolyte battery according to the second embodiment;
FIG. 8 shows an exploded perspective view of an exemplary battery pack according to a third embodiment;
FIG. 9 shows a block diagram showing an electric circuit of the battery pack in FIG. 8;
FIG. 10 shows a pore diameter distribution curve obtained by the mercury porosimetry for electrode layers of electrodes in the first to third embodiments; and

FIG. 11 shows a cumulative pore volume frequency curve obtained by the mercury porosimetry for electrode layers of electrodes in the first to third embodiments.

DETAILED DESCRIPTION

According to a first embodiment, an electrode is provided as defined in claim 1. According to a second embodiment, a nonaqueous electrolyte battery is provided as defined in claim 10. According to a third embodiment, a battery pack is provided as defined in claim 11. Hereinafter, the embodiments will be described with reference to the drawings. The same reference signs are attached to common components throughout the embodiments and a duplicate description is omitted. Each drawing is a schematic view to promote the description of each embodiment and an understanding thereof and the shape, dimensions, or ratios thereof may be different from those of an actual device and the design thereof may appropriately be changed in consideration of the description that follows and publicly known technologies.

(First Embodiment)

According to a first embodiment, an electrode is provided. The electrode includes a current collector and an electrode layer formed on the current collector. The electrode contains particles of an active material containing niobium-titanium composite oxide. A mode diameter in a pore diameter distribution of the electrode layer obtained by the mercury porosimetry is in the range of 0.1 $\mu$m to 0.2 $\mu$m.

First, the electrode layer included in an electrode according to the first embodiment contains particles of an active material containing niobium-titanium composite oxide. The mode diameter in the pore diameter distribution of the electrode layer obtained by the mercury porosimetry is in the range of 0.1 $\mu$m to 0.2 $\mu$m.

The niobium-titanium composite oxide may be changed in volume by, for example, occlusion/emission of lithium during charge and discharge. The electrode layer included in an electrode according to the first embodiment exhibits a pore diameter distribution in which the mode diameter is in the range of 0.1 $\mu$m to 0.2 $\mu$m and so can have spatial room to be able to accept changes in volume of the niobium-titanium composite oxide. Therefore, an electrode according to the first embodiment can inhibit the electrode layer from cracking due to a charge/discharge.

Also, the electrode layer included in an electrode according to the first embodiment exhibits a pore diameter distribution in which the mode diameter is in the range of 0.1 $\mu$m to 0.2 $\mu$m and so can have a sufficient space allowing a nonaqueous electrolyte to be impregnated. Thus, the electrode layer exhibiting such a pore diameter distribution is excellent in impregnating ability of the nonaqueous electrolyte. Also, such an electrode layer can prevent pores from blocking off due to the repeated charge/discharge.

Further, the electrode layer included in an electrode according to the first embodiment can secure sufficient electric conduction between the particles of the active material while being able to have, as described above, a sufficient space allowing a nonaqueous electrolyte to be impregnated and spatial room to be able to accept changes in volume of the niobium-titanium composite oxide. That is, an electrode according to the first embodiment can implement both of excellent impregnation of the nonaqueous electrolyte and excellent electric conduction between the particles of the active material and can also prevent a blockage of pores and cracks of the electrode layer caused by the repeated charge/discharge.

Based on the above results, an electrode according to the first embodiment can implement a nonaqueous electrolyte battery excellent in input/output characteristics and cycle life characteristics with a large current.

An electrode whose mode diameter in a pore diameter distribution obtained by the mercury porosimetry is less than 0.1 $\mu$m cannot achieve sufficient impregnation of the nonaqueous electrolyte. Also in such an electrode layer, for example, decomposition products of the nonaqueous electrolyte may be attached to the surface of pores after the repeated charge/discharge, leading to clogging of pores. Also, such an electrode layer may be cracked due to changes in volume of the active material caused by the repeated charge/discharge. Based on the above results, an electrode including the electrode layer whose mode diameter in a pore diameter distribution obtained by the mercury porosimetry is less than 0.1 $\mu$m cannot implement a nonaqueous electrolyte battery excellent in input/output characteristics and cycle life characteristics with a large current.

On the other hand, the electrode layer whose mode diameter in a pore diameter distribution obtained by the mercury porosimetry is larger than 0.2 $\mu$m has a high electric resistance because the distance between the particles of the active material is too far apart. Therefore, an electrode including such an electrode layer cannot implement a nonaqueous electrolyte battery excellent in input/output characteristics and cycle life characteristics with a large current.

As will be shown in an embodiment described below, an electrode layer that does not contain the particles of the active material containing niobium-titanium composite oxide cannot achieve improvements of input/output characteristics and cycle life characteristics with a large current even if the mode diameter in a pore diameter distribution obtained by the mercury porosimetry is in the range of 0.1 $\mu$m to 0.2 $\mu$m. Alternatively, depending on the type of the particles of the active material, an electrode layer whose mode diameter in a pore diameter distribution obtained by the mercury porosimetry is in the range of 0.1 $\mu$m to 0.2 $\mu$m cannot be obtained.

Next, an electrode according to the first embodiment will be described in detail.

The electrode according to the first embodiment includes a current collector, and an electrode layer formed on the current collector.

The current collector is desirably made of aluminum foil or aluminum alloy foil. A negative electrode current collector desirably has an average crystal grain size of 50 $\mu$m or less. The strength of the current collector can thereby be increased dramatically so that the negative electrode can be made denser at a high pressing pressure and the battery capacity can be increased. In addition, the dissolution/corrosion degradation of the negative electrode current collector in an over-discharge cycle in a high-temperature environment (40°C or higher) can be prevented so that an increase of the negative electrode impedance can be inhibited. Further, output characteristics, quick charge, and charge and discharge cycle characteristics can be improved. A more desirable range of the average crystal grain size is 30 $\mu$m or less and a still more desirable range is 5 $\mu$m or less.

The average crystal grain size is determined as described below. The number n of crystal grains present within 1 mm$\times$1 mm is determined by observing the structure of the current collector surface using an optical microscope. An average crystal particle area S is determined from $S=1\times10^6/n(\mu m^2)$ using n. An average crystal grain size $d(\mu m)$ is calculated from the obtained value of S using Formula (1) below.

$$d=2(S/\pi)^{1/2} \quad (1)$$

Aluminum foil or aluminum alloy foil whose average crystal grain size is in the range of 50 $\mu$m or less is complexly affected by many factors such as the material composition, impurities, working conditions, heat treatment history, and heating conditions of anneal and the crystal grain size (diameter) is adjusted by combining various factors in manufacturing processes.

The thickness of aluminum foil or aluminum alloy foil is desirably 20 $\mu$m or less and more desirably 15 $\mu$m or less. The purity of aluminum foil is desirably 99% or more. An alloy containing elements such as magnesium, zinc, or silicon is desirable as an aluminum alloy. On the other hand, the content of transition metals such as iron, copper, nickel, and chromium is desirably set to 1% or less.

An electrode layer may be formed on one side of the current collector or on both sides thereof. The current collector may include a portion holding no electrode layer on the surface and the portion can work as an electrode tab.

The electrode contains the particles of the active material containing niobium-titanium composite oxide. For example, the active material is the niobium-titanium composite oxide.

$Nb_2TiO_7$, $Nb_{10}Ti_2O_{29}$, $Nb_{24}TiO_{62}$, $Nb_{14}TiO_{37}$, $Nb_2Ti_2O_9$ and the like can be cited as the niobium-titanium composite oxide. Substituted niobium-titanium composite oxide in which other elements are substituted for at least a portion of Nb and/or Ti may be contained. As substitutional elements, for example, V, Cr, Mo, Ta, Zr, Mn, Fe, Mg, B, Pb, and Al can be cited. Substituted niobium-titanium composite oxide may be substituted for one substitutional element or a plurality of substitutional elements. The particles of the active material may contain one or a plurality of types of containing niobium-titanium composite oxides. Particularly, the particles of the active material promisingly contain niobium-titanium composite oxide $Nb_2TiO_7$ having a monoclinic system structure.

The particles of the active material contain secondary particles in which primary particles are aggregated. The electrode contains a carbon containing layer coating at least a part of the particles of the active material. The particles of the active material desirably contain particles of niobium-titanium composite oxide and the carbon containing layer coating a portion of the surfaces thereof, for example, a carbon coat. The carbon containing layer may coat the surfaces of respective primary particles or the surfaces of secondary particles. The particles of the active material containing the carbon containing layer have improved electronic conductivity, which makes it easier to pass a large current. An electrode containing the particles of the active material containing the carbon containing layer can inhibit an over-voltage from arising and so can implement a nonaqueous electrolyte battery exhibiting more excellent cycle life characteristics.

The average particle size of primary particles of the particles of the active material is desirably within the range of 0.1 $\mu$m to 10 $\mu$m. The average particle size of primary particles of the particles of the active material is more desirably within the range of 1 $\mu$m to 5 $\mu$m. The average particle size of secondary particles of the particles of the active material is within the range of 1 $\mu$m to 30 $\mu$m. The average particle size of secondary particles of the articles of the active material is more desirably within the range of 5 $\mu$m to 15 $\mu$m.

A specific surface area by the BET method based on $N_2$ adsorption of the particles of the active material is desirably within the range of 1 to 30 m$^2$/g. The particles of the active material whose specific surface area is within the range of 1 to 30 m$^2$/g can sufficiently have an effective area contributing to an electrode reaction and so can implement excellent large current discharge characteristics. Also, the particles of the active material whose specific surface area is within the range of 1 to 30 m$^2$/g can allow the negative electrode and the nonaqueous electrolyte to react properly so that degradation of the charge/discharge efficiency and the generation of gas during storage can be inhibited. An electrode layer containing the particles of the active material whose specific surface area is within the range of 1 to 30 $m^2$/g can inhibit the distribution of the nonaqueous electrolyte from being biased toward the electrode or a counter electrode.

An electrode layer may also contain particles of a second active material other than the particles of the active material containing niobium-titanium composite oxide. Examples of the second active material include spinel type lithium titanate $Li_4Ti_5O_{12}$, anatase type titanium dioxide, and monoclinic crystal $\beta$ type titanium dioxide $TiO_2$ (B) . The electrode layer may contain one or a plurality of types of the second active material The particles of the active material containing niobium-titanium composite oxide desirably occupy 50% or more of the weight of the total weight of the particles of the active material containing niobium-titanium composite oxide and the particles of the second active material.

The electrode layer further contains a conductive agent. The conductive agent can enhance electronic conductivity and current collecting performance of the electrode layer and can further reduce contact resistance of the electrode layer and the current collector. As the conductive agent, for example, carbon based materials such as coke, carbon black, and graphite can be used. The average particle size of the conductive agent is desirably within the range of 0.03 $\mu$m to 4 $\mu$m. Similarly, the specific surface area of the conductive agent is desirably 5 $m^2$/g or more to construct a good conducting network and desirably 100 $m^2$/g or less to inhibit the generation of gas effectively.

The electrode layer may further contain a binder. The binder can fill a gap between the particles of the active material to bind the active material and the conductive agent. As the binder, for example, polyvinylidene difluoride (PVdF) whose average molecular weight is between $2\times10^5$ and $20\times10^5$, or acrylic rubber, acrylic resin, styrene butadiene rubber, or a cellulosic binder can be used. The average molecular weight that is more desirable is between $5\times10^5$ and $10\times10^5$. As the cellulosic binder, for example, carboxymethyl cellulose can be cited.

The compounding ratio of the active material (the particles of the active material containing niobium-titanium composite oxide +(if contained) the particles of the second active material), the conductive agent, and the binder in an electrode layer is desirably within the range of 65 to 98% by weight for the active material, 1 to 25% by weight for the conductive agent, and 1 to 10% by weight for the binder. By setting the quantity of the conductive agent to 2% by weight or more, high current collecting performance can be obtained and so excellent large current characteristics can be obtained. From the viewpoint of higher capacities, on the other hand, the quantity of the conductive agent is desirably 20% by weight or less. On the other hand, by setting the quantity of the binder to 6% by weight or less, appropriate viscosity of the coating liquid can be obtained and so excellent coating can be performed.

The electrode layer has, as described above, the mode diameter in a pore diameter distribution obtained by the mercury porosimetry, that is, the most frequent pore diameter in the range of 0.1 $\mu$m to 0.2 $\mu$m. The mode diameter in a pore diameter distribution is desirably within the range of 0.1 $\mu$m to 0.17 $\mu$m.

The density of the electrode layer is desirably 2.4 g/$cm^3$ or more. An electrode whose density in the electrode layer is 2.4 g/$cm^3$ or more can have sufficient contact with an electron conduction path and so can implement excellent input/output characteristics with a large current. The density of the electrode layer is desirably less than 2.8 g/$cm^3$.

The pore diameter distribution of an electrode depends on, for example, the particle size distribution and the compounded quantity of materials having particle shapes contained in the electrode layer, preparation method of slurry for electrode production, and pressing pressure of a coating film. An electrode according to the first embodiment whose mode diameter in a pore diameter distribution of an electrode layer obtained by the mercury porosimetry is within the range of 0.1 $\mu$m to 0.2 $\mu$m can be manufactured by, for example, the method described in the embodiment. More specifically, the shear strength can be increased by mixing carboxymethyl cellulose and the active material. By mixing here, a mixture of hardness that does not fall after being scooped up with a spatula can be obtained. In addition, it is desirable to use carboxymethyl cellulose with a high degree of etherification, desirably with a degree of etherification in the range of 0.9 to 1.4. By dispersing the mixture obtained as described above with a high shear strength, the active material can be disentangled. By the manufacturing method including the dispersion as described above, an electrode according to the first embodiment whose mode diameter in a pore diameter distribution of an electrode layer obtained by the mercury porosimetry is within the range of 0.1 $\mu$m to 0.2 $\mu$m can be obtained.

Next, the measuring method of the pore diameter distribution of an electrode layer by the mercury porosimetry and the measuring method of the particle size of the particles of the active material contained in the electrode layer will be described.

When measurements of an electrode incorporated into a battery should be made, the electrode is taken out from the battery by following the procedure described below.

First, the battery is discharged until the remaining capacity is 0%. The discharged battery is put into a glove box of an inert atmosphere. Therein, the cell is opened by cutting the container thereof while taking care not to allow the positive electrode and the negative electrode to short-circuit. The electrode connected to a negative electrode terminal is taken out therefrom. The electrode cut out therefrom is washed in a container storing methylethyl carbonate (MEC) while slightly shaking the electrode. Then, the electrode is taken out and put into a vacuum dryer to completely dry off methylethyl carbonate. Next, the electrode is taken out from the glove box. A portion of the electrode having been taken out is immersed in pure water and the electrode is slightly shaken to allow powder to settle. If the binder is of water type, the powder is thereby peeled off the electrode. If there is almost no change, the electrode is immersed in N-methylpyrolidone (NMP) and similarly shaken slightly to allow powder to settle.

<Measuring method of the pore diameter distribution by the mercury porosimetry>

The measurement of the pore diameter distribution of an electrode layer by the mercury porosimetry can be made by following the procedure described below.

First, the electrode to be measured is divided into the electrode layer and the current collector. A sample of the size of about $25 \times 25$ mm$^2$ is cut out from the electrode layer separated from the current collector. The sample is folded and adopted as a measurement cell to make measurements under the conditions of initial pressure 5 kPa (about 0.7 psia, corresponding to the pore diameter of about 250 μm) and final pressure of about 60,000 psia (corresponding to the pore diameter of about 0.003 μm).

As a measuring instrument of the pore diameter distribution, for example, Shimadzu Auto-Pore 9520 Series can be used. From the pore diameter distribution by the mercury porosimetry, the pore volume and the mode diameter and median diameter of voids can be determined.

The principle of analysis of the mercury porosimetry is based on Formula (1) by Washburn.

$$D = -4\gamma\cos\theta/P \qquad (1)$$

where P is the applied pressure, D is the pore diameter, γ is the surface tension (480dyne·cm-1) of mercury, and θ is the contact angle between mercury and the wall surface of pore and 140°. γ and θ are constants and thus, the relation between the applied pressure P and the pore diameter D is determined from the formula of Washburn and by measuring the mercury porosimetry volume at that time, the pore diameter and the volume distribution thereof can be derived. For details of the measuring method, principle and the like, see "BIRYU SHI HANDO BUKKU (Fine Particle Handbook)" by Genji Jimbo et al., Asakura Publishing (1991) or "HUNTAI BUSSEI SOKUTEI HO (Powder Properties Measuring Method)" edited by Sohachiro Hayakawa, Asakura Publishing (1978).

<Measuring method of the particle size of particles of active material>

The particle size of the particles of the active material can be measured by a particle size distribution measuring device. On the other hand, SEM observations of the electrode surface or cross section are made using a portion of a negative electrode group having been taken out. If secondary particles are present, an almost spherical shape is formed by aggregated particles. If such a state of shape is not found, particles can be considered to include only primary particles. The particle size is measured by using the graduation of an SEM image or a measurement function of SEM.

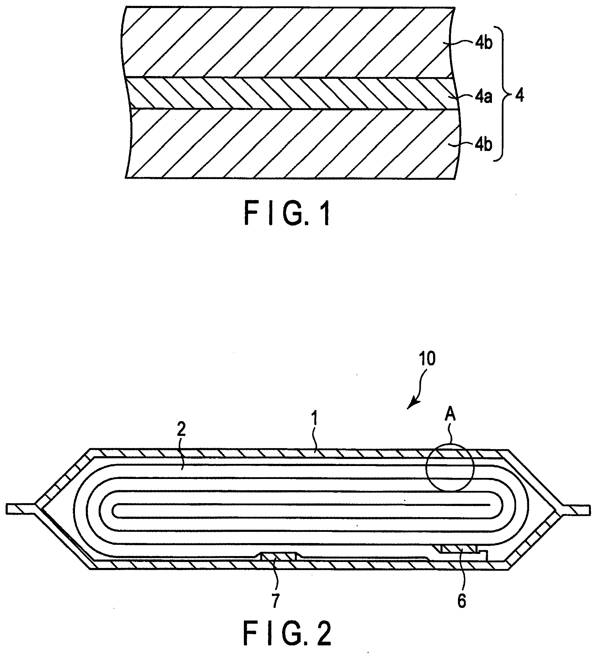

Next, an example of the electrode according to the first embodiment will be described with reference to FIG. 1.

FIG. 1 is a schematic sectional view of an exemplary electrode according to the first embodiment.

An electrode 4 shown in FIG. 1 includes a current collector 4a and an electrode layer 4b formed on both sides thereof.

The current collector 4a may be, though both ends thereof are omitted in FIG. 1, a metal or alloy foil in a band shape.

The electrode layer 4b is held on the current collector 4a. The electrode layer 4b contains the particles of the active material containing niobium-titanium composite oxide.

The current collector 4a includes a portion that does hold the electrode layer 4b on both sides thereof (not shown) . The portion can work as an electrode tab.

An electrode according to the first embodiment includes a current collector and an electrode layer formed on the current collector. The electrode contains the particles of the active material containing niobium-titanium composite oxide. A mode diameter in the pore diameter distribution of the electrode layer obtained by the mercury porosimetry is in the range of 0.1 μm to 0.2 μm. The electrode can implement both of excellent impregnation of the nonaqueous electrolyte and excellent electric conduction between the particles of the active material and can also prevent a blockage of pores and cracks of the electrode layer caused by the repeated charge/discharge. As a result, an electrode according to the first embodiment can implement a nonaqueous electrolyte battery excellent in input/output characteristics and cycle life characteristics with a large current.

(Second Embodiment)

According to a second embodiment, there is provided a nonaqueous electrolyte battery. The nonaqueous electrolyte battery includes the electrode according to the second embodiment as a negative electrode, a positive electrode, and a nonaqueous electrolyte.

Next, the electrode according to the second embodiment will be described in more detail.

A nonaqueous electrolyte battery according to the second embodiment includes the electrode according to the first embodiment as a negative electrode. The negative electrode has been described in detail in the first embodiment so is the description thereof is omitted here. In the description that follows, the current collector, the electrode layer, the active material, and the electrode tab in an electrode according to the first embodiment as a negative electrode will be called a negative electrode current collector, a negative electrode layer, a negative electrode active material, and a negative electrode tab respectively to distinguish from those of a positive electrode.

A nonaqueous electrolyte battery according to the second embodiment further includes a positive electrode.

The positive electrode can include a positive electrode current collector and a positive electrode layer formed on the positive electrode current collector.

The positive electrode layer may be held on one of sides of the positive electrode current collector or both sides. The positive electrode current collector may include a portion holding no positive electrode layer on the surface and the portion can work as a positive electrode tab.

The positive electrode layer may include a positive electrode active material and also optionally a conductive agent and a binder.

The positive electrode can be produced by the following method, for example. The positive electrode active material, the binder, and the conductive agent are suspended in a suitable solvent, to prepare a slurry. The slurry is applied to the surface of the positive electrode current collector, and dried to form the positive electrode layer. Then, the positive electrode layer is subjected to pressing. The positive electrode may also be produced by making the positive electrode active material, the binder, and the conductive agent into a pellet, and then disposing the pellet as the positive electrode layer on the positive electrode current collector.

The positive electrode and the negative electrode are provided such that the positive electrode layer and the negative electrode layer are opposed to each other, thereby making it possible to constitute an electrode group. A member allowing to pass lithium ions and not to pass electricity, e.g., a separator can be provided between the positive electrode layer and the negative electrode layer.

The electrode group can take various structures. The electrode group may have a stack-type structure, or may have a coiled-type structure. The stack-type structure has a structure where a plurality of negative electrodes, a plurality of positive electrodes, and separators are laminated with each of the separators sandwiched between each of the negative electrodes and each of the positive electrodes, for example. The electrode group having a coiled-type structure may be a can-type structure obtained by coiling a product obtained by laminating a negative electrode and a positive electrode with a separator sandwiched therebetween, for example, or may be a flat-type structure obtained by pressing the can-type structure.

The positive electrode tab can be electrically connected to a positive electrode terminal. Similarly, the negative electrode tab can be electrically connected to a negative electrode terminal. The positive electrode terminal and the negative electrode terminal can be extended from the electrode group.

The electrode group may be housed in a container member. The container member may have a structure where the positive electrode terminal and the negative electrode terminal can be extended to the outside of the container member. Alternatively, the container member may include two external terminals each of which is electrically connected to one of the positive electrode terminal and the negative electrode terminal.

The nonaqueous electrolyte battery according to the second embodiment further includes a nonaqueous electrolyte. The nonaqueous electrolyte may be impregnated in the electrode group. The nonaqueous electrolyte may be housed in the container member.

Hereinafter, materials for the members which can be used in the nonaqueous electrolyte battery according to the second embodiment will be described.

(1) Negative electrode

Materials used for the negative electrode described in the first embodiment can be used for the negative electrode.

(2) Positive electrode

As positive electrode active materials, various kinds of oxide, sulfide, polymers and the like can be used. For example, manganese dioxide ($MnO_2$), iron oxide, copper oxide, and nickel oxide containing lithium, lithium-manganese composite oxide (for example, $Li_xMn_2O_4$ or $Li_xMnO_2$), lithium-nickel composite oxide (for example, $Li_xNiO_2$), lithium-cobalt composite oxide ($Li_xCoO_2$), lithium-nickel-cobalt composite oxide (for example, $LiNi_{1-y}Co_yO_2$), lithium-manganese-

cobalt composite oxide (for example, $LiMn_yCo_{1-y}O_2$), spinel type lithium-manganese-nickel composite oxide ($Li_xMn_{2-y}Ni_yO_4$), lithium-phosphorus composite oxide having an olivine structure (such as $Li_xFePO_4$, $Li_xFe_{1-y}Mn_yPO_4$, and $Li_xCoPO_4$), iron sulfate ($Fe_2(SO_4)_3$), and vanadium oxide (for example, $V_2O_5$) can be cited. Also, conductive polymer materials such as polyaniline and polypyrrole, disulfide polymer materials, sulfur (S), organic materials such as carbon fluoride, and inorganic materials can be cited.

As more desirable positive electrode active materials for secondary battery, materials from which a higher battery voltage is obtained can be cited. For example, lithium-manganese composite oxide ($Li_xMn_2O_4$), lithium-nickel composite oxide ($Li_xNiO_2$), lithium-cobalt composite oxide ($Li_xCoO_2$), lithium-nickel-cobalt composite oxide ($Li_xNi_{1-y}Co_yO_2$), spinel type lithium-manganese-nickel composite oxide ($Li_xMn_{2-y}Ni_yO_4$), lithium-manganese-cobalt composite oxide ($Li_xMn_yCo_{1-y}O_2$), and lithium-iron phosphate ($Li_xFePO_4$) can be cited. x and y are desirably in the range of 0 to 1.

Also, as a positive electrode active material, lithium-nickel-cobalt-manganese composite oxide whose composition is represented by $Li_aNi_bCo_cMn_dO_2$ (where molar ratios a, b, c, d are in the following ranges: $0 \leq a \leq 1.1$, $0.1 \leq b \leq 0.5$, $0 \leq c \leq 0.9$, $0.1 \leq d \leq 0.5$) can be used.

When a nonaqueous electrolyte containing room-temperature-molten salt is used, using lithium-iron phosphate, $Li_xVPO_4F$, lithium-manganese composite oxide, lithium-nickel composite oxide, or lithium-nickel-cobalt composite oxide is desirable from the viewpoint of cycle life. This is because of less reactivity of the positive electrode active material and room-temperature-molten salt.

As the conductive agent, for example, acetylene black, carbon black, and graphite can be cited.

As the binder, for example, polytetrafluoroethylene (PTFE), polyvinylidene difluoride (PVdF), fluororubber, acrylic rubber, and acrylic resin can be cited.

The compounding ratio of the positive electrode active material, the conductive agent, and the binder is desirably within the range of 80 to 95% by weight for the positive electrode active material, 3 to 18% by weight for the conductive agent, and 2 to 17% by weight for the binder.

The positive electrode current collector is desirably made of aluminum foil or aluminum alloy foil and the average crystal grain size thereof is desirably, like the negative electrode current collector, 50 $\mu$m or less. More desirably, the average crystal grain size is 30 $\mu$m or less. Still more desirably, the average crystal grain size is 5 $\mu$m or less. By setting the average crystal grain size to 50 $\mu$m or less, the strength of the aluminum foil or aluminum alloy foil can be increased dramatically so that the positive electrode can be made denser at a high pressing pressure and the battery capacity can be increased.

Aluminum foil or aluminum alloy foil whose average crystal grain size is in the range of 50 $\mu$m or less is complexly affected by a plurality of factors such as the material composition, impurities, working conditions, heat treatment history, and annealing conditions. The average crystal grain size is adjusted by combining these various factors in manufacturing processes.

The thickness of aluminum foil or aluminum alloy foil is desirably 20 $\mu$m or less and more desirably 15 $\mu$m or less. The purity of aluminum foil is desirably 99% or more. An alloy containing elements such as magnesium, zinc, or silicon is desirable as an aluminum alloy. On the other hand, the content of transition metals such as iron, copper, nickel, and chromium is desirably set to 1% or less.

The positive electrode density is desirably set to 3 g/cm³ or more. Accordingly, the resistance of the interface between the positive electrode and the separator can be reduced and input/output characteristics with a large current can further be improved. At the same time, the dispersion of nonaqueous electrolyte by capillarity can be promoted so that cycle degradation due to depletion of the nonaqueous electrolyte can be inhibited.

(3) Separator

A porous separator can be used as a separator. As the porous separator, for example, a porous film containing polyethylene, polypropylene, cellulose, or polyvinylidene difluoride (PVdF), nonwoven cloth of synthetic resin, and the like can be cited. Among others, a porous film made of polyethylene, polypropylene, or both can improve safety of secondary batteries and is desirable.

The percentage of voids of the separator by the mercury porosimetry is desirably 50% or more. The percentage of voids is desirably 50% or more from the viewpoint of improving maintenance of the nonaqueous electrolyte and improving the input/output density. Also, the percentage of voids is desirably 70% or less from the viewpoint of ensuring the safety of battery. A more desirable range of the percentage of voids is 50 to 65%.

The median diameter and mode diameter can be determined from the pore diameter distribution of a separator by the mercury porosimetry. Here, the mode diameter refers to a peak top of a pore diameter distribution curve in which the horizontal axis represents the pore diameter and the vertical axis represents the frequency. The median diameter is a pore diameter whose cumulative volume frequency is 50%.

The median diameter of voids of a separator by the mercury porosimetry is made larger than the mode diameter.

Such a separator has many voids of large diameters so that the resistance of the separator can be decreased.

The resistance of a separator increases with an increasing time when exposed to a high-temperature environment or a high-potential (oxidizing atmosphere) environment. That is, the deposition of reaction products (separator clogging) involved in degeneration of the separator itself or a secondary reaction occurring on the surface of the electrode increases the resistance of the separator and degrades battery performance. If, in this case, the potential of the negative electrode is low, a portion of decomposition products arising in the interface between the positive electrode and the nonaqueous electrolyte is more likely to be deposited on the surface of the negative electrode.

A negative electrode containing a negative electrode active material whose Li occlusion potential is 0.4 V (vs. Li/Li$^+$) or higher has a high potential. Therefore, it is difficult for decomposition products to be precipitated on the negative electrode side so that voids in contact with the negative electrode of the separator can be inhibited from being blocked and also a blockage of voids due to degeneration of the separator itself can be suppressed. Therefore, even after being exposed to a high-temperature environment for a long time in a charged state, degradation of large-current performance can remarkably be suppressed.

The separator desirably has the mode diameter of voids by the mercury porosimetry between 0.05 $\mu$m and 0.4 $\mu$m. If the mode diameter is set to less than 0.05 $\mu$m, the membrane resistance of the separator increases and further, the separator degenerates in a high-temperature, high-voltage environment and voids collapse, leading to concerns about the degradation of output. If the mode diameter is larger than 0.4 $\mu$m, shutdown of the separator does not occur uniformly and there is a cause for concern about the degradation of safety. A more desirable range is between 0.10 $\mu$m and 0.35 $\mu$m.

The separator desirably has a median diameter of voids by the mercury porosimetry between 0.1 $\mu$m and 0.5 $\mu$m. If the median diameter is less than 0.1 $\mu$m, the membrane resistance of the separator increases and further, the separator degenerates in a high-temperature, high-voltage environment and voids collapse, leading to concerns about the degradation of output. If the median diameter is more than 0.5 $\mu$m, shutdown of the separator does not occur uniformly and safety is degraded and also the dispersion of an electrolytic solution due to capillarity is less likely to occur, inducing cycle degradation due to depletion of the electrolytic solution. A more desirable range is between 0.12 $\mu$m and 0.40 $\mu$m.

(4) Nonaqueous electrolyte

A liquid nonaqueous electrolyte can be used as the nonaqueous electrolyte.

The liquid nonaqueous electrolyte can be prepared by, for example, dissolving an electrolyte in an organic solvent.

As the electrolyte, for example, lithium salts such as lithium perchlorate (LiClO$_4$), lithium hexafluorophosphate (LiPF$_6$), lithium tetrafluoroborate (LiBF$_4$), lithium hexafluoroarsenic (LiAsF$_6$), lithium trifluoromethanesulfonate (LiCF$_3$SO$_3$), and lithium bis-trifluoromethyl sulfonylimide (LiN(CF$_3$SO$_2$)$_2$) can be cited.

The electrolyte is desirably dissolved in an organic solvent in the range of 0.5 to 2.5 mol/L.

As the organic solvent, for example, cyclic carbonate such as ethylene carbonate (EC), propylene carbonate (PC), and vinylene carbonate (VC), chain carbonate such as dimethyl carbonate (DMC), methylethyl carbonate (MEC), and diethyl carbonate (DEC), cyclic ether such as tetrahydrofuran (THF) and 2-methyltetrahydrofuran (2MeTHF), chain ether such as dimethoxy-ethane (DME), $\gamma$-butyrolactone (BL), acetonitrile (AN), and sulfolane (SL) can be cited. These organic solvents can be used singly or in combinations of two or more.

An room-temperature-molten salt containing lithium ions may be used as the liquid nonaqueous electrolyte.

The room-temperature-molten salt means a salt at least part of which can exist in a liquid state at room temperature. The term "room temperature" means a temperature range in which power sources are assumed to usually operate. The temperature range is, for example, from an upper limit of about 120°C or about 60°C, depending on the case, to a lower limit of about -40°C or about -20°C, depending on the case.

As the lithium salt, one having a wide potential window and usually utilized in a nonaqueous electrolyte battery is used. Examples of the lithium salt include, though are not limited to, LiBF$_4$, LiPF$_6$, LiClO$_4$, LiCF$_3$SO$_3$, LiN(CF$_3$SO$_2$)$_2$, LiN(C$_2$F$_5$SO$_2$), and LiN(CF$_3$SC(C$_2$F$_5$SO$_2$))$_3$. These lithium salts may be used either singly or in combinations of two or more.

The content of the lithium salt is preferably 0.1 to 3.0 mol/L, and particularly preferably 1.0 to 2.0 mol/L. When the content of the lithium salt is 0.1 mol/L or more, the resistance of the electrolyte can be decreased. Thereby, the discharge performance of a battery under large-current/low-temperature conditions can be improved. When the content of the lithium salt is 3.0 mol/L or less, the melting point of the electrolyte can be kept low, enabling the electrolyte to keep a liquid state at room temperature.

The room-temperature-molten salt has, for example, a quaternary ammonium organic cation or an imidazolium cation.

Examples of the quaternary ammonium organic cation include an imidazolium ion such as an ion of dialkylimidazolium or trialkylimidazolium, a tetraalkylammonium ion, an alkylpyridium ion, a pyrazolium ion, a pyrrolidinium ion, and a piperidinium ion. Particularly, the imidazolium cation is preferable.

Examples of the tetraalkylammonium ion include, though are not limited to, a trimethylethylammonium ion, a trimethylpropylammonium ion, a trimethylhexylammonium ion, and a tetrapentylammonium ion.

Examples of the alkylpyridium ion include, though are not limited to, a N-methylpyridium ion, a N-ethylpyridinium ion, a N-propylpyridinium ion, a N-butylpyridinium ion, a 1-ethyl-2-methylpyridinium ion, a 1-butyl-4-methylpyridinium ion, and a 1-butyl-2,4-dimethylpyridinium ion.

The room-temperature-molten salt having a cation may be used either singly or in combinations of two or more.

Examples of the imidazolium cation include, though are not limited to, a dialkylimidazolium ion, and a trialkylimidazolium ion.

Examples of the dialkylimidazolium ion include, though are not limited to, a 1,3-dimethylimidazolium ion, a 1-ethyl-3-methylimidazolium ion, a
1-methyl-3-ethylimidazolium ion, a
1-methyl-3-butylimidazolium ion, and a
1-butyl-3-methylimidazolium ion.

Examples of the trialkylimidazolium ion include, though are not limited to, a 1,2,3-trimethylimidazolium ion, a 1,2-dimethyl-3-ethylimidazolium ion, a
1,2-dimethyl-3-propylimidazolium ion, and a
1-butyl-2,3-dimethylimidazolium ion.

The room temperature molten salts having a cation may be used either singly or in combinations of two or more.

(5) Container member

As the container member, a container made of metal of 0.5 mm or less in thickness or a container made of laminate film of 0.2 mm or less in thickness can be used. As the container made of metal, a metal can made of aluminum alloy, iron, stainless or the like in an angular or cylindrical shape can be used. The thickness of the container made of metal is desirably set to 0.2 mm or less.

A multilayer film in which metal foil is coated with a resin film can be used as the laminate film. As the resin, a polymeric resin such as polypropylene (PP), polyethylene (PE), nylon, and polyethylene terephthalate (PET) can be used.

An alloy containing elements such as magnesium, zinc, or silicon is desirable as the aluminum alloy constituting the container made of metal. On the other hand, the content of transition metals such as iron, copper, nickel, and chromium is desirably set to 1% or less. Accordingly, long-term reliability and heat dissipation properties in a high-temperature environment can remarkably be improved.

A metal can made of aluminum or aluminum alloy desirably has the average crystal grain size of 50 $\mu$m or less. More desirably, the average crystal grain size is 30 $\mu$m or less. Still more desirably, the average crystal grain size is 5 $\mu$m or less. By setting the average crystal grain size to 50 $\mu$m or less, the strength of the metal can made of aluminum or aluminum alloy can remarkably be increased so that the can be made thinner. As a result, a battery that is light and of high power, excellent in long-term reliability, and suitable for vehicle mounting can be implemented.

(6) Negative electrode terminal

The negative electrode terminal can be formed from a material having electric stability and conductivity when the potential with respect to a lithium ion metal is between 0.4 V and 3 V. More specifically, an aluminum alloy containing elements such as Mg, Ti, Zn, Mn, Fe, Cu, and Si and aluminum can be cited. It is desirable for negative electrode terminal to use the same material as that of the negative electrode current collector to reduce the contact resistance.

(7) Positive electrode terminal

The positive electrode terminal can be formed from a material having electric stability and conductivity when the potential with respect to a lithium ion metal is between 3 V and 5 V. More specifically, an aluminum alloy containing elements such as Mg, Ti, Zn, Mn, Fe, Cu, and Si and aluminum can be cited. It is desirable for positive electrode terminal to use the same material as that of the positive electrode current collector to reduce the contact resistance.

Next, some examples of the nonaqueous electrolyte battery according to the second embodiment will concretely be described with reference drawings.

First, a first exemplary nonaqueous electrolyte battery of according to the second embodiment will be described.

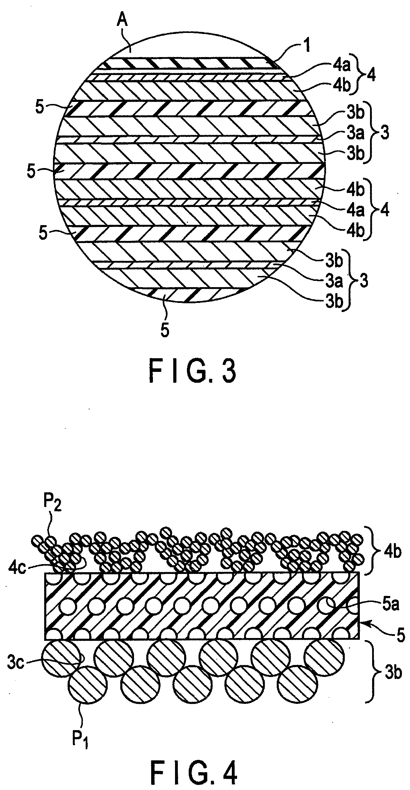

FIG. 2 is a schematic sectional view of a first nonaqueous electrolyte battery according to the second embodiment. FIG. 3 is an enlarged sectional view of an A portion in FIG. 2. FIG. 4 is a schematic view showing the neighborhood of boundaries of a positive electrode, a separator, and a negative electrode in the nonaqueous electrolyte battery in FIG. 2.

A first exemplary nonaqueous electrolyte battery 10 includes, as shown in FIG. 2, a container member 1 and an electrode group 2. The nonaqueous electrolyte battery 10 also includes a nonaqueous electrolyte (not shown).

As shown in FIG. 2, the electrode group 2 is housed inside the container member 1 made of, for example, a laminate film. The electrode group 2 has a structure in which a layered product in which a positive electrode 3 and a negative electrode 4 shown in FIG. 3 are laminated via a separator 5 is wound in a flat shape. As shown in FIG. 3, the positive electrode 3 includes a positive electrode current collector 3a and a positive electrode layer 3b formed on at least one side of the positive electrode current collector 3a. Also, the negative electrode 4 includes a negative electrode current collector 4a and a negative electrode layer 4b formed on at least one side of the negative electrode current collector 4a. The separator 5 is sandwiched, as shown in FIG. 3, between the positive electrode layer 3b and the negative electrode layer 4b.

As shown in FIG. 4, the positive electrode layer 3b, the negative electrode layer 4b, and the separator 5 are porous. The nonaqueous electrolyte is held in a void 3c positioned between the particles of the positive electrode active material P1 in the positive electrode layer 3b, a void 4c positioned between the particles of the negative electrode active material P2 in the negative electrode layer 4b, and a void 5a of the separator 5. The separator 5 holding the nonaqueous electrolyte in the void 5a functions as an electrolytic plate. In these voids 3c, 4c, 5a, a polymer having adhesive properties may be held together with the nonaqueous electrolyte.

As shown in FIG. 2, a positive electrode terminal 6 is connected to the positive electrode current collector 3a positioned near the outermost circumference of the electrode group 2. The positive electrode terminal 6 has a band shape and the tip thereof is drawn out from the container member 1. Also, a negative electrode terminal 7 is connected to the negative electrode current collector 4a positioned near the outermost circumference of the electrode group 2. The negative electrode terminal 7 has a band shape and the tip thereof is drawn out from the container member 1. The positive electrode terminal 6 and the negative electrode terminal 7 are drawn from the same side of the container member 1 and the drawing direction of the positive electrode terminal 6 and the drawing direction of the negative electrode terminal 7 are the same.

The negative electrode current collector 4a may be positioned in the outermost layer of the electrode group 2 so that at least a portion of the surface of the outermost layer is coated with an adhesive portion. Accordingly, the electrode group 2 can be bonded to the container member 1.

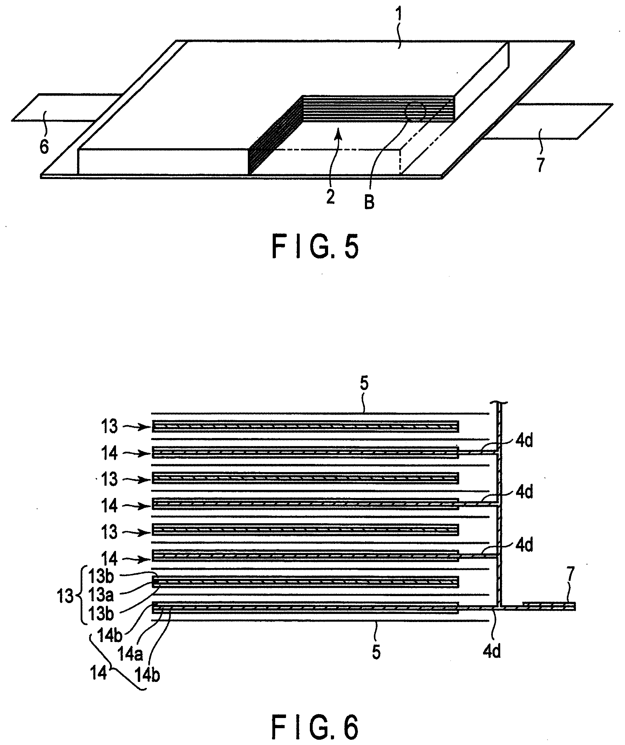

A nonaqueous electrolyte battery according to the second embodiment is not limited to the configuration shown in FIGS. 2 to 4 and may include the configuration shown in FIGS. 5 and 6.

Hereinafter, a second exemplary nonaqueous electrolyte battery according to the second embodiment will be described with reference to FIGS. 5 and 6. FIG. 5 is a partially notched perspective view of another exemplary nonaqueous electrolyte battery according to the second embodiment. FIG. 6 is an enlarged sectional view of a B portion in FIG. 5.

The second exemplary nonaqueous electrolyte battery 10 includes, as shown in FIGS. 5 and 6, the container member 1 and the laminated electrode group 2. Further, the second exemplary nonaqueous electrolyte battery further includes a nonaqueous electrolyte (not shown).

As shown in FIG. 5, the laminated electrode group 2 is housed in the container member 1 made of a laminate film. The laminated electrode group 2 has a structure in which, as shown in FIG. 6, the positive electrode 3 and the negative electrode 4 are alternately laminated by interposing the separator 5 therebetween. There is a plurality of the positive electrodes 3 and each includes the positive electrode current collector 3a and the positive electrode layer 3b held on both sides of the positive electrode current collector 3a. There is a plurality of the negative electrodes 4 and each includes the negative electrode current collector 4a and the negative electrode layer 4b held on both sides of the negative electrode current collector 4a. A portion 4d of the negative electrode current collector 4a of the negative electrode 4 protrudes from the positive electrode 3. The portion 4d does not hold the negative electrode layer 4b on the surface thereof and can work as a negative electrode tab. As shown in FIG. 6, a plurality of negative electrode tabs 4d is electrically connected to the negative electrode terminal 7 in a band shape. Then, the tip of the negative electrode terminal 7 in a band shape is drawn out, as shown in FIG. 5, from the container member 1. Though not illustrated here, the positive electrode current collector 3a of the positive electrode 3 has a side positioned on the opposite side of the negative electrode tab 4d of the negative electrode current collector 4a protruding from the negative electrode 4. A portion protruding from the negative electrode 4 of the positive electrode current collector 3a does not hold the positive electrode layer 3b on the surface thereof and can work as a positive electrode tab. A plurality of positive electrode tabs is electrically connected to the positive electrode terminal 6 in a band shape. Then, the tip of the positive electrode terminal 6 in a band shape is drawn out, as shown in FIG. 5, from a side of the container member 1. The direction in which the positive electrode terminal 6 is drawn out from the container member 1 is opposite to the direction in which the negative electrode terminal 7 is drawn out from the container member 1.

In the foregoing, the winding structure as shown in FIGS. 2 and 3 and the laminated structure as shown in FIGS. 5 and 6 are cited as the structure of an electrode group. To provide a high level of safety and reliability, in addition to excellent input/output characteristics, the laminated structure is desirably adopted as the structure of an electrode group. Further, to implement high large-current performance when used for a long period of time, it is desirable to use by adopting the laminated structure of an electrode group including the positive electrode and the negative electrode and folding the separator zigzag.

The reason for adopting the laminated structure and folding a separator zigzag will be described.

The median diameter of a separator is made larger than the mode diameter to implement excellent large-current characteristics. That is, large pores are allowed to exist in the separator. Thus, the pricking strength of the separator itself decreases. When an electrode group in the winding structure is obtained by spirally winding and then flatly molding a positive electrode and a negative electrode via a separator, the electrode is bent at an acute angle at edges. In this state, the frequency with which an active material containing layer is broken and a broken portion of the active material containing layer pierces the separator increases. That is, the frequency of batteries that become defective due to internal short-circuits when batteries are manufactured increases. Therefore, it is desirable for the electrode group to adopt the laminated structure in which there is no need to bent the electrode.

Further, even when the laminated structure is adopted for the electrode group, the separator is desirably arranged in zigzag folding. If the median diameter of the separator is made larger than the mode diameter and large pores are allowed to exist in the separator, mobility of the nonaqueous electrolyte in the separator by capillarity decreases. If the separator is folded zigzag, three sides of each of the positive electrode and the negative electrode are in direct contact with the nonaqueous electrolyte without going through the separator so that nonaqueous electrolyte moves smoothly to the electrode. Thus, even if the nonaqueous electrolyte is consumed on the electrode surface after long-term use, the nonaqueous electrolyte is smoothly supplied so that excellent large-current characteristics (input/output characteristics) can be implemented for a long period of time. If a structure in which the separator is in a bag shape or the like is adopted even for the same laminated structure, the electrode arranged inside the bag is in direct contact with the nonaqueous electrolyte only on one side and thus, it is difficult to smoothly supply the nonaqueous electrolyte. Therefore, if the nonaqueous electrolyte is consumed on the electrode surface after long-term use, the nonaqueous electrolyte is not smoothly supplied. As a result, with an increasing frequency of use, large-current characteristics (input/output characteristics) are gradually degraded.

From the above, it is desirable to adopt the laminated structure for an electrode group including a positive electrode and a negative electrode and to arrange a separator that spatially separates the positive electrode and the negative electrode in zigzag folding.

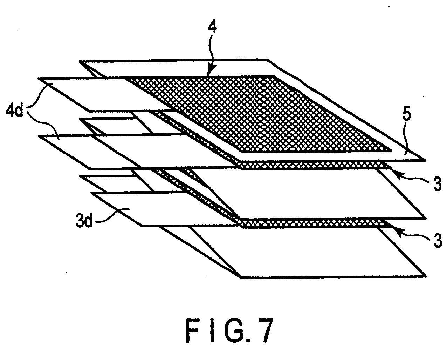

An example of an electrode group in which the laminated structure is included and the separator is folded zigzag will be described below with reference to FIG. 7.

FIG. 7 is a schematic perspective view of an exemplary electrode group that can be included in the nonaqueous electrolyte battery according to the second embodiment.

The electrode group 2 according to a modification shown in FIG. 7 includes the separator 5 in a band shape folded zigzag. The separator 5 in zigzag folding has the negative electrode 4 in a flag shape laminated in the top layer. The positive electrode 3 and the negative electrode 4 in a flag shape are alternately inserted into a space formed by the separators 5 opposite to each other. A positive electrode tab 3d of the positive electrode current collector 3a and the negative electrode tab 4d of the negative electrode current collector 4a protrude in the same direction from the electrode group 2. In the electrode group 2 shown in FIG. 7, the positive electrode tabs 3d overlap and the negative electrode tabs 4d overlap in the lamination direction of the electrode group 2, but the positive electrode tab 3d and the negative electrode tab 4d do not overlap.

The positive electrode tabs 3d of a plurality of the positive electrodes 3 in the electrode group 2 shown in FIG. 7 can be joined to each other. Similarly, the negative electrode tabs 4d of a plurality of the negative electrodes 4 in the electrode group 2 can be joined to each other. A plurality of the positive electrode tabs 3d joined to each other can electrically be connected to, like the battery shown in FIGS. 5 and 6, a positive electrode terminal (not shown). Similarly, a plurality of the negative electrode tabs 4d joined to each other can electrically be connected to, like the battery shown in FIGS. 5 and 6, a negative electrode terminal (not shown).

FIG. 7 illustrates the electrode group 2 including the two positive electrodes 3 and the two negative electrodes 4. However, the numbers of the positive electrodes 3 and the negative electrodes 4 can freely be changed depending on purposes and uses. In addition, the protruding directions of the positive electrode tab 3d and the negative electrode tabs 4d from the electrode group 2 do not need to be the same as shown in FIG. 7 and may be directions forming, for example, about 90° or 180° to each other.

A nonaqueous electrolyte battery according to the second embodiment includes the electrode according to the first embodiment. Thus, the nonaqueous electrolyte battery according to the second embodiment can exhibit excellent input/output characteristics and cycle life characteristics with a large current.

(Third embodiment)

According to a third embodiment, there is provided a battery pack. The battery pack includes the nonaqueous electrolyte battery according to the second embodiment.

The battery pack according to the third embodiment can include one or a plurality of nonaqueous electrolyte batteries (unit cells) according to the second embodiment. The plurality of nonaqueous electrolyte batteries that can be included in the battery pack according to the third embodiment may electrically be connected in series or in parallel to each other to form a battery module. The battery pack according to the third embodiment may include a plurality of battery modules.

Subsequently, the battery pack according to the third embodiment will be described with reference to the drawings.

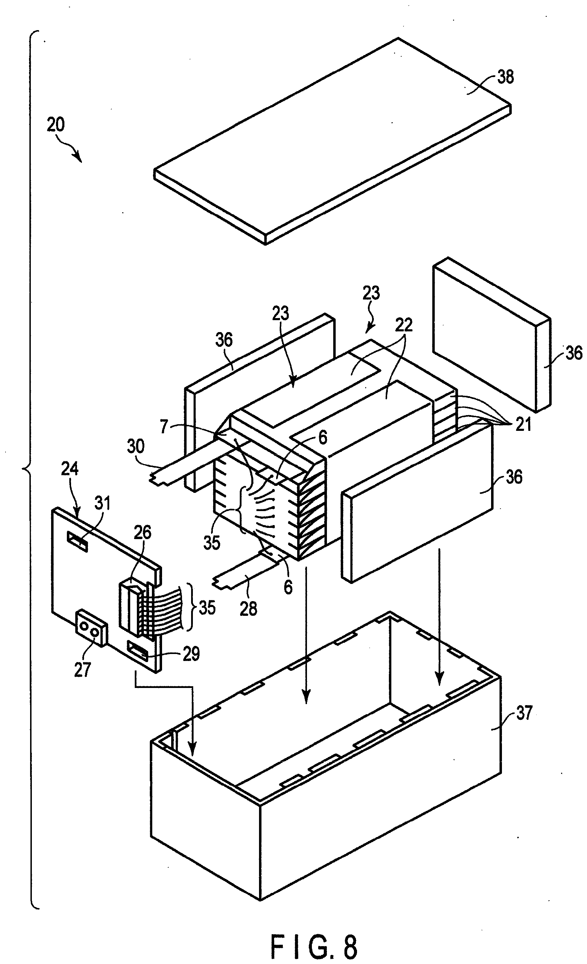

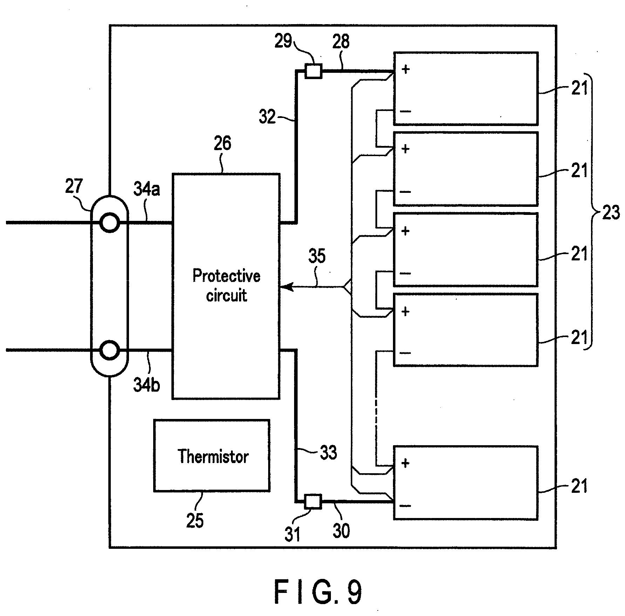

FIG. 8 is an exploded perspective view of a battery pack according to a third embodiment. FIG. 9 is a block diagram showing the electric circuit of the battery pack of FIG. 8.

A battery pack 20 shown in FIGS. 8 and 9 includes a plurality of unit cells 21. The plurality of unit cells 21 is the nonaqueous electrolyte battery 10 in a flat shape described with reference to FIGS. 2 to 4.

The plurality of unit cells 21 constitutes a battery module 23 by being laminated such that the positive electrode terminal 6 and the negative electrode terminal 7 extending to the outside are aligned in the same direction and fastened by an adhesive tape 22. As shown in FIG. 9, these unit cells 21 are electrically connected to each other in series.

A printed wiring board 24 is arranged opposite to a side surface of the battery module 23 from which the positive electrode terminal 6 and the negative electrode terminal 7 extend. As shown in FIG. 9, a thermistor 25, a protective circuit 26, and an energizing terminal 27 to external devices are mounted on the printed wiring board 24. An insulating plate (not shown) to avoid unnecessary connection to wires of the battery module 23 is mounted on the surface where the printed wiring board 24 is opposite to the battery module 23.

A positive electrode lead 28 is connected to the positive electrode terminal 6 positioned in the bottom layer of the battery module 23 and the tip thereof is inserted into a positive electrode connector 29 of the printed wiring board 24 for electric connection. A negative electrode lead 30 is connected to the negative electrode terminal 7 positioned in the top layer of the battery module 23 and the tip thereof is inserted into a negative electrode connector 31 of the printed wiring board 24 for electric connection. These connectors 29, 31 are connected to the protective circuit 26 through wires 32, 33 formed on the printed wiring board 24 respectively.

The thermistor 25 detects the temperature of the unit cell 21. A detection signal thereof is sent to the protective circuit 26. The protective circuit 26 can cut off a positive-side wire 34a and a negative-side wire 34b between the protective circuit 26 and the energizing terminal 27 under a predetermined condition. The predetermined condition is, for example, when the temperature detected by the thermistor 25 is equal to a predetermined temperature or higher. Another example of the predetermined condition is when an over-charge, an over-discharge, an over-current or the like of the unit cell 21 is detected. The over-charge, the over-discharge, the over-current or the like is detected for each of the unit cells 21 or for the battery module 23 as a whole. When detected for each of the unit cells 21, the battery voltage may be detected or the positive electrode potential or negative electrode potential may be detected. In the latter case, a lithium electrode used as a reference electrode is inserted into each of the unit cells 21. In the case of the battery pack 20 shown in FIGS. 8 and 9, a wire 35 for voltage detection is connected to each of the unit cells 21 and detection signal is sent to the protective circuit 26 through the wire 35.

Protective sheets 36 comprised of rubber or resin are arranged on three side surfaces of the battery module 23 except the side surface from which the positive electrode terminal 6 and the negative electrode terminal 7 are protruded.

The battery module 23 is housed in a housing container 37 together with each of the protective sheets 36 and the printed wiring board 24. That is, the protective sheets 36 are arranged on both internal surfaces in a long side direction of the housing container 37 and on one of the internal surface at the opposite side in a short side direction. The printed wiring board 24 is arranged on the other internal surface in a short side direction. The battery module 23 is located in a space surrounded by the protective sheets 36 and the printed wiring board 24. A lid 38 is attached to the upper surface of the housing container 37.

In order to fix the battery module 23, a heat-shrinkable tape may be used in place of the adhesive tape 22. In this case, the battery module is bound by placing the protective sheets on the both sides of the battery module, winding a heat-shrinkable tape around such, and thermally shrinking the heat-shrinkable tape.

In FIGS. 8 and 9, a form in which the plurality of cells 21 is connected in series is shown, but the unit cells 21 may also be connected in parallel to increase the battery capacity. Alternatively, the series connection and the parallel connection may be combined. Combined battery packs may further be connected in series or in parallel.

The aspect of the battery pack according to the third embodiment is appropriately changed according to the use. The battery pack according to the third embodiment is used suitably for the application which requires the excellent cycle characteristics when a high current is taken out. It is used specifically as a power source for digital cameras, for vehicles such as two- or four-wheel hybrid electric vehicles, for two- or four-wheel electric vehicles, and for assisted bicycles. Particularly, it is suitably used as a battery for automobile use.

When a mixed solvent in which at least two of a group consisting of propylene carbonate (PC), ethylene carbonate (EC), and $\gamma$-butyrolactone (GBL) are mixed or a solvent containing $\gamma$-butyrolactone (GBL) is used as the nonaqueous electrolyte, uses in which high-temperature characteristics are desired are desirable. More specifically, the use for vehicle mounting described above can be cited.

The battery pack according to the third embodiment includes the nonaqueous electrolyte battery according to the second embodiment. Thus, the battery pack according to the third embodiment can exhibit excellent input/output characteristics and cycle life characteristics with a large current.

[Embodiment]

Hereinafter, the present invention will be described in more detail by citing examples. A laser diffraction particle size distribution measuring device (Nikkiso Microtrac MT3000) is used to measure the particle sizes of the particles of the active material and conductive agent particles.

[Production Example 1]

<Production of the electrode>

In Production Example 1, electrodes of embodiments 1-1 to 1-3 and comparative examples 1-1, 1-2 are first produced following the procedure shown below.
As the active material, the powder of $Nb_2TiO_7$ in which the average secondary particle size is 10 $\mu$m and the Li occlusion/emission potential is higher than the potential of metal lithium by more than 1.0 V is prepared.
The active material, acetylene black as a conductive agent in which the average particle size is 35 nm, carboxymethyl cellulose as a binder, and styrene butadiene rubber as a binder are mixed by adding pure water such that the weight ratio is 93:5:1:1 to prepare a slurry. The obtained slurry is applied to aluminum foil having a thickness of 15 $\mu$m and in which the average crystal grain size is 30 $\mu$m in the quantity of 100 g/m$^2$ and dried. A total of five pieces of slurry applied foil is produced by repeating the same procedure.
Next, the obtained five pieces of slurry applied foil are pressed at different pressing pressures to produce electrodes having the electrode densities of 2.4 g/cm$^3$ (embodiment 1-1), 2.5 g/cm$^3$ (embodiment 1-2), 2.6 g/cm$^3$ (embodiment 1-3), 2.7 g/cm$^3$ (comparative example 1-1), and 2.8 g/cm$^3$ (comparative example 1-2).

<Production of the evaluation cell>

To evaluate output characteristics and cycle life characteristics, three-pole cells for evaluation of the embodiments 1-1 to 1-3 and comparative examples 1-1, 1-2 are produced using the electrodes in the embodiments 1-1 to 1-3 and comparative examples 1-1, 1-2 as negative electrodes respectively according to the procedure below.

<Production of the positive electrode>

First, lithium-cobalt composite oxide ($LiCoO_2$) powder as the positive electrode active material (90% by weight), acetylene black (3% by weight), graphite (3% by weight), and polyvinylidene difluoride (PVdF) (4% by weight) are added to N-methylpyrolidone (NMP) and mixed to prepare a slurry. The slurry is applied to both sides of a current collector made of aluminum foil having a thickness of 15 $\mu$m and in which the average crystal grain size is 30 $\mu$m and then dried and pressed to produce a positive electrode in which the electrode density is 3.0 g/cm$^3$ and the surface roughness Ra(+) is 0.15 $\mu$m.

<Assembly of evaluation cells>

Each negative electrode created as described above is cut out in the size of 2×2 cm as a working electrode. Similarly, the positive electrode created as described above is cut out in the size of 2×2 cm as a counter electrode. The working electrode and the counter electrode are opposed to each other via a glass filter (separator). Further, a lithium metal is inserted into the glass filter as a reference electrode by taking care not to come into contact with the working electrode and the counter electrode. These electrodes are put into a three-pole glass cell and each of the working electrode, the counter electrode, and the reference electrode is connected to a terminal of the glass cell.
On the other hand, 1 mol/L of lithium hexafluorophosphate ($LiPF_6$) is dissolved in a solvent in which ethylene carbonate and diethyl carbonate are mixed in the volume ratio of 1:2 to prepare an electrolytic solution.
25 mL of the prepared electrolytic solution is poured into a glass cell so that the separator and each electrode are sufficiently impregnated with the electrolytic solution. In this state, the glass cell is sealed. In this way, three-pole cells for evaluation of the embodiments 1-1 to 1-3 and comparative examples 1-1, 1-2 are each produced.

<Evaluation>

Each evaluation cell is arranged inside a temperature controlled oven at 25°C to be submitted for output characteristics evaluation. Here, a charge and discharge test is performed by maintaining the charging side constant at 1.0 C and changing the current density on the discharging side to 0.2 C, 1.0 C, 2.0 C, 3.0 C, 4.0 C, and 5.0 C.

Each evaluation cell is also arranged inside the temperature controlled oven at 25°C to be submitted for cycle characteristics evaluation. In the cycle test, the charge at 1 C and the discharge at 1 C are set as one cycle and the discharge capacity in each discharge is measured. Also, after each charge and each discharge, the evaluation cell is allowed to stand alone for 10 min.

<Measurement of the pore diameter distribution by the mercury porosimetry>

The negative electrode is taken out from each evaluation cell after the evaluation. The negative electrode having been taken out is cleaned and dried as described above.

A sample piece in the size of 50×50 mm is cut out from the dried negative electrode as sample weight of 1 g.

The sample piece sampled as described above is submitted to pore diameter distribution measurement by the mercury porosimetry. Shimadzu Auto-Pore 9520 Series is used as a measuring instrument of the pore diameter distribution. In this way, the pore diameter distribution of the electrode layer of each electrode is obtained.

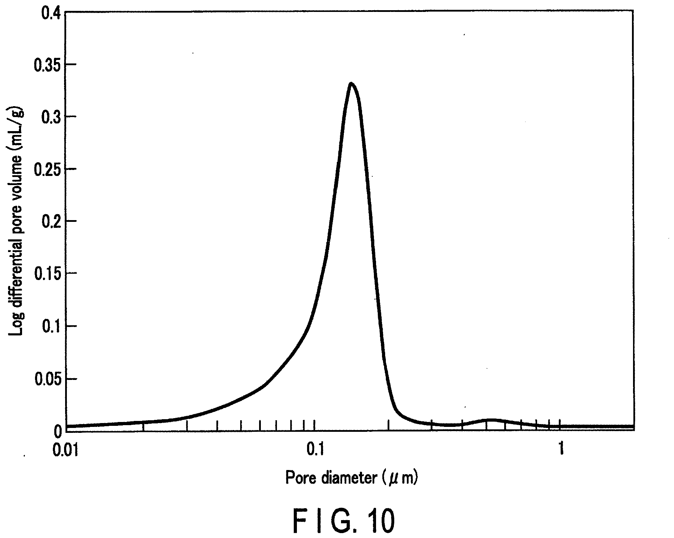

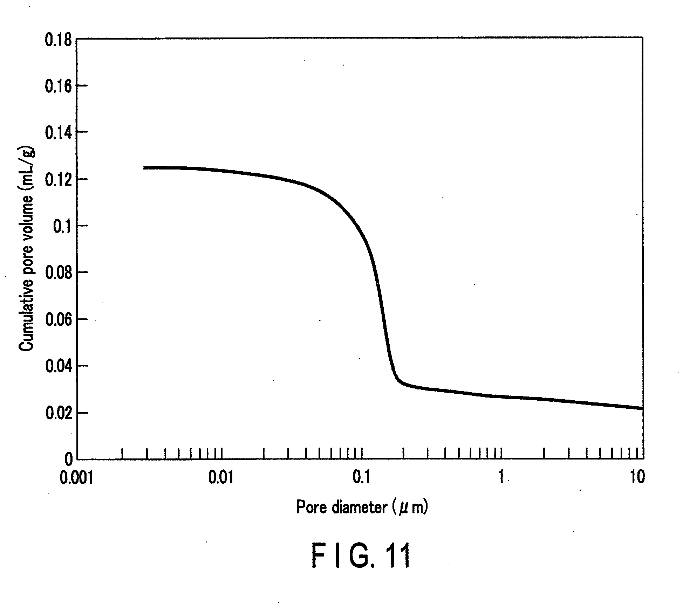

A pore diameter distribution curve and a cumulative pore volume frequency curve of the electrode layers of electrodes in the embodiments 1-3 obtained by the mercury porosimetry are shown in FIGS. 10 and 11 respectively.

The pore volume and the mode diameter and median diameter of voids are determined from the obtained pore diameter distribution.

The principle of analysis of the mercury porosimetry is based on Formula (1) by Washburn.

$$D=-4\gamma\cos\theta/P \qquad (1)$$

where P is the applied pressure, D is the pore diameter, $\gamma$ is the surface tension (480dyne·cm-1) of mercury, and $\theta$ is the contact angle between mercury and the wall surface of pore and 140°. $\gamma$ and $\theta$ are constants and thus, the relation between the applied pressure P and the pore diameter D is determined from the formula of Washburn and by measuring the mercury porosimetry volume at that time, the pore diameter and the volume distribution thereof can be derived. For details of the measuring method, principle and the like, see "BIRYU SHI HANDO BUKKU (Fine Particle Handbook)" by Genji Jimbo et al., Asakura Publishing (1991) or "HUNTAI BUSSEI SOKUTEI HO (Powder Properties Measuring Method)" edited by Sohachiro Hayakawa, Asakura Publishing (1978).

<Results>

The density, the pore volume of the electrode layer obtained from the pore diameter distribution measurements by the mercury porosimetry, and the mode diameter and the median diameter of voids of electrodes in the embodiments 1-1 to 1-3 and comparative examples 1-1, 1-2 are shown in Table 1 below. The mode diameter in Table 1 represents the pore diameter at the peak top in a log differential distribution. The median diameter in Table 1 is a pore diameter whose cumulative volume frequency is 50% in a cumulative distribution curve.

[Table 1]

| Production Example 1 [$Nb_2TiO_7$] | | | | |
|---|---|---|---|---|
| | Electrode density | Pore volume (mL/g) | Median diameter (volume) ($\mu$m) | Mode diameter (volume) ($\mu$m) |
| Embodiment 1-1 | 2.4 g/cm$^3$ | 0.178 | 0.17 | 0.17 |
| Embodiment 1-2 | 2.5 g/cm$^3$ | 0.148 | 0.14 | 0.14 |
| Embodiment 1-3 | 2.6 g/cm$^3$ | 0.130 | 0.12 | 0.12 |
| Comparative example 1-1 | 2.7 g/cm$^3$ | 0.115 | 0.10 | 0.09 |
| Comparative example 1-2 | 2.8 g/cm$^3$ | 0.106 | 0.09 | 0.08 |

It is clear from Table 1 that the pore volume, the median diameter, and the mode diameter of the electrode layers of electrodes produced in Production Example 1 decrease with an increasing electrode density after pressing.

As an example of the pore diameter distribution, the pore diameter distribution of the electrode in the embodiment 1-3 obtained by the mercury porosimetry will be described. As shown in FIG. 10, the pore diameter at the peak top of the log differential distribution in the pore diameter distribution of the electrode in the embodiment 1-3, that is, the mode diameter is 0.12 $\mu$m. Also, as shown in FIG. 11, the cumulative pore volume significantly increases between 0.1 to 0.2 $\mu$m, which means that the number of pores in this range is particularly large.

Output characteristics of the evaluation cells in the embodiments 1-1 to 1-3 and the comparative examples 1-1, 1-2 are shown in Table 2 and cycle life characteristics thereof are shown in Table 3. In Table 2, the discharge capacity at 0.2 C is set as 100% and a relative value of the discharge capacity at each rate is shown. In Table 3, the discharge capacity in the first cycle is set as 100% and a relative value of the discharge capacity in the 45th cycle and the 90th cycle is shown.

[Table 2]

| Production Example 1 <Output characteristics> | | | | | | | |
|---|---|---|---|---|---|---|---|
| | Mode diameter (volume) ($\mu$m) | Discharge capacity maintenance factor | | | | | |
| | | 0.2C | 1C | 2C | 3C | 4C | 5C |
| Embodiment 1-1 | 0.17 | 100.0 % | 95.3 % | 92.3 % | 87.5 % | 73.8 % | 54.1 % |
| Embodiment 1-2 | 0.14 | 100.0 % | 95.3 % | 92.0 % | 87.0 % | 73.7 % | 54.6 % |
| Embodiment 1-3 | 0.12 | 100.0 % | 94.8 % | 91.2 % | 84.9 % | 69.0 % | 50.9 % |
| Comparative example 1-1 | 0.09 | 100.0 % | 94.8 % | 91.0 % | 83.8 % | 65.4 % | 47.9 % |
| Comparative example 1-2 | 0.08 | 100.0 % | 94.9 % | 90.5 % | 80.4 % | 61.2 % | 45.5 % |

[Table 3]

| Production Example 1<Cycle life characteristics> | | | | |
|---|---|---|---|---|
| | Mode diameter (volume) ($\mu$m) | Discharge capacity maintenance factor | | |
| | | 1cyc | 45cyc | 90cyc |
| Embodiment 1-1 | 0.17 | 100.0 % | 94.0 % | 87.9 % |
| Embodiment 1-2 | 0.14 | 100.0 % | 94.6 % | 89.1 % |
| Embodiment 1-3 | 0.12 | 100.0 % | 93.8 % | 87.5 % |
| Comparative example 1-1 | 0.09 | 100.0 % | 92.8 % | 81.8 % |
| Comparative example 1-2 | 0.08 | 100.0 % | 91.4 % | 78.7 % |

From the results shown in Table 2, it is clear that the evaluation cells in the embodiments 1-1 to 1-3 in which the mode diameter in the pore diameter distribution of the electrode layer obtained by the mercury porosimetry is in the range of 0.1 $\mu$m to 0.2 $\mu$m are superior in output characteristics to the evaluation cells in the comparative examples 1-1, 1-2 in which the mode diameter is less than 0.1 $\mu$m. It is clear that particularly the evaluation cells in the embodiments 1-1, 1-2 can exhibit more excellent output characteristics.

From the results shown in Table 3, it is clear that the evaluation cells in the embodiments 1-1 to 1-3 in which the mode diameter in the pore diameter distribution of the electrode layer obtained by the mercury porosimetry is in the range of 0.1 $\mu$m to 0.2 $\mu$m are far superior in cycle life characteristics to the evaluation cells in the comparative examples 1-1, 1-2 in which the mode diameter is less than 0.1 $\mu$m. It is clear that particularly the evaluation cell in the embodiment 1-2 can exhibit particularly excellent cycle life characteristics.

On the other hand, in the evaluation cells in the comparative examples 1-1, 1-2, the mode diameter in the pore diameter distribution of the electrode layer of the electrodes in the comparative examples 1-1, 1-2 as negative electrodes is less than 0.1 $\mu$m and thus, the electrolytic solution is less likely to penetrate into the negative electrode and as a result, the supply of lithium ions to the electrode layer during charge and discharge cycle is considered to be insufficient. The lithium ions are needed for electrochemical reactions of the active material. In addition, the negative electrode layer in the evaluation cells in the comparative examples 1-1, 1-2 cracked due to the charge and discharge cycle.

[Production Example 2]

<Production of the electrode>

In Production Example 2, electrodes of embodiments 2-1 to 2-3 and comparative examples 2-1, 2-2 are produced following the procedure shown below.

As the active material, C coated $Nb_2TiO_7$ powder in which the particles surfaces are coated with carbon (hereinafter, the C coat) is prepared.

The C-coated $Nb_2TiO_7$ powder is prepared as described below. First, $Nb_2TiO_7$ powder similar to the powder used in Production Example 1 is prepared. The powder is input into a carbon fluid dispersion for coating to obtain a suspension.

The suspension prepared as described above is sprayed into a furnace in which the temperature is controlled to be constant to evaporate a solvent of the suspension. In this way, a carbon containing layer coating the surfaces of $Nb_2TiO_7$ particles is formed. That is, the C coat is provided to the surfaces of $Nb_2TiO_7$ particles . The obtained C-coated $Nb_2TiO_7$ powder has the average secondary particle size of 6 $\mu$m.

The active material, acetylene black as a conductive agent in which the average particle size is 35 nm, carboxymethyl cellulose as a binder, and styrene butadiene rubber as a binder are mixed by adding pure water such that the weight ratio is 93:5:1:1 to prepare a slurry. The obtained slurry is applied to aluminum foil having a thickness of 15 $\mu$m and in which the average crystal grain size is 30 $\mu$m in the quantity of 100 g/m$^2$ and dried. A total of five pieces of slurry applied foil is produced by repeating the same procedure.

Next, the obtained five pieces of slurry applied foil are pressed at different pressing pressures to produce electrodes having the electrode densities of 2.4 g/cm$^3$ (embodiment 2-1), 2.5 g/cm$^3$ (embodiment 2-2), 2.6 g/cm$^3$ (embodiment 2-3), 2.7 g/cm$^3$ (comparative example 2-1), and 2.8 g/cm$^3$ (comparative example 2-2).

<Production of evaluation cells>

To evaluate output characteristics and cycle life characteristics, three-pole cells for evaluation of the embodiments 2-1 to 2-3 and comparative examples 2-1, 2-2 are produced according to the same procedure as the procedure in Production Example 1 except that the electrodes in the embodiments 2-1 to 2-3 and comparative examples 2-1, 2-2 are used negative electrodes respectively.

<Evaluation>

Output characteristics and cycle life characteristics of the evaluation cells in the embodiments 2-1 to 2-3 and comparative examples 2-1, 2-2 are evaluated according to the same procedure as the procedure in Production Example 1 series .

After the evaluation, like in Production Example 1 series, the electrode layers of the electrodes in the embodiments 2-1 to 2-3 and comparative examples 2-1, 2-2 are submitted to pore diameter distribution measurements by the mercury porosimetry.

<Results>

The density, the pore volume of the electrode layer obtained from the pore diameter distribution measurements by the mercury porosimetry, and the mode diameter and the median diameter of voids of electrodes in the embodiments 2-1 to 2-3 and comparative examples 2-1, 2-2 are shown in Table 4 below.

[Table 4]

| Production Example 2 [$Nb_2TiO_7$ (carbon coat by spray drying) | | | | |
|---|---|---|---|---|
| | Electrode density | Pore volume (mL/g) | Median diameter (volume) ($\mu$m) | Mode diameter (volume) ($\mu$m) |
| Embodiment 2-1 | 2.4 g/cm$^3$ | 0.175 | 0.17 | 0.17 |
| Embodiment 2-2 | 2.5 g/cm$^3$ | 0.146 | 0.14 | 0.14 |
| Embodiment 2-3 | 2.6 g/cm$^3$ | 0.127 | 0.11 | 0.10 |
| Comparative example 2-1 | 2.7 g/cm$^3$ | 0.111 | 0.09 | 0.08 |

(continued)

| Production Example 2 [Nb$_2$TiO$_7$ (carbon coat by spray drying) | | | | |
|---|---|---|---|---|
| | Electrode density | Pore volume (mL/g) | Median diameter (volume) ($\mu$m) | Mode diameter (volume) ($\mu$m) |
| Comparative example 2-2 | 2.8 g/cm$^3$ | 0.100 | 0.08 | 0.07 |

It is clear from Table 4 that the pore volume, the median diameter, and the mode diameter of the electrode layers of electrodes produced in Production Example 2 decrease with an increasing electrode density after pressing.

Output characteristics of the evaluation cells in the embodiments 2-1 to 2-3 and the comparative examples 2-1, 2-2 are shown in Table 5 and cycle life characteristics thereof are shown in Table 6.

[Table 5]

| Production Example 2 <Output characteristics> | | | | | | | |
|---|---|---|---|---|---|---|---|
| | Mode diameter (volume) ($\mu$m) | Discharge capacity maintenance factor | | | | | |
| | | 0.2C | 1C | 2C | 3C | 4C | 5C |
| Embodiment 2-1 | 0.17 | 100.0 % | 96.4 % | 93.4 % | 88.6 % | 74.2 % | 58.5 % |
| Embodiment 2-2 | 0.14 | 100.0 % | 96.3 % | 92.9 % | 87.9 % | 74.6 % | 58.1 % |
| Embodiment 2-3 | 0.10 | 100.0 % | 95.7 % | 92.9 % | 85.4 % | 72.6 % | 55.0 % |
| Comparative example 2-1 | 0.08 | 100.0 % | 95.7 % | 91.7 % | 84.9 % | 68.1 % | 50.5 % |
| Comparative example 2-2 | 0.07 | 100.0 % | 95.5 % | 90.9 % | 81.0 % | 64.2 % | 49.7 % |

[Table 6]

| Production Example 2<Cycle life characteristics> | | | | |
|---|---|---|---|---|
| | Mode diameter (volume) ($\mu$m | Discharge capacity maintenance factor | | |
| | | 1cyc | 45cyc | 90cyc |
| Embodiment 2-1 | 0.17 | 100.0 % | 94.5 % | 90.1 % |
| Embodiment 2-2 | 0.14 | 100.0 % | 95.1 % | 90.5 % |
| Embodiment 2-3 | 0.10 | 100.0 % | 94.8 % | 89.9 % |
| Comparativ e example 2-1 | 0.08 | 100.0 % | 93.1 % | 82.5% |
| Comparativ e example 2-2 | 0.07 | 100.0 % | 92.0 % | 79.4 % |

From the results shown in Table 5, it is clear that the evaluation cells in the embodiments 2-1 to 2-3 in which the mode diameter in the pore diameter distribution of the electrode layer obtained by the mercury porosimetry is in the range of 0.1 $\mu$m to 0.2 $\mu$m are superior in output characteristics to the evaluation cells in the comparative examples 2-1, 2-2 in which the mode diameter is less than 0.1 $\mu$m. It is clear that particularly the evaluation cells in the embodiments 2-1, 2-2 can exhibit more excellent output characteristics.

From the results shown in Table 6, it is clear that the evaluation cells in the embodiments 2-1 to 2-3 in which the mode diameter in the pore diameter distribution of the electrode layer obtained by the mercury porosimetry is in the range of 0.1 $\mu$m to 0.2 $\mu$m are far superior in cycle life characteristics to the evaluation cells in the comparative examples 2-1, 2-2 in which the mode diameter is less than 0.1 $\mu$m. It is clear that particularly the evaluation cell in the embodiment 2-2 can exhibit particularly excellent cycle life characteristics.

On the other hand, in the evaluation cells in the comparative examples 2-1, 2-2, the mode diameter in the pore diameter distribution of the electrode layer of the electrodes in the comparative examples 2-1, 2-2 as negative electrodes is less than 0.1 $\mu$m and thus, the electrolytic solution is less likely to penetrate into the electrode layer and therefore, the supply of lithium ions to the electrode layer during charge and discharge cycle is considered to be insufficient. The lithium ions are needed for electrochemical reactions of the active material. In addition, the negative electrode layer in the evaluation cells in the comparative examples 2-1, 2-2 cracked due to the charge and discharge cycle.

Comparison of results shown in Tables 2 and 3 and results shown in Tables 5 and 6 shows that the evaluation cells in Production Example 2 series have the discharge capacity maintenance factor of 5C/0.2C 3% higher than that of the evaluation cells in Production Example 1 series on average. This can be considered to be a result that in the electrodes in the embodiments 2-1 to 2-3, the electron conduction path is firmly formed due to the C coat on the surfaces of the particles of the active material in the electrode layer.

[Production Example A]

<Production of the electrode>

In Production Example A, electrodes in comparative examples A-1 to A-5 are produced by following the procedure described below.

In Production Example A, a slurry containing an active material is prepared in the same manner as in Production Example 1 except that the powder of $TiO_2$ (B) in which the average particle size is 13 $\mu$m and the Li occlusion/emission potential is higher than the potential of metal lithium by more than 1.0 V is used as the active material.

The slurry is applied to aluminum foil having a thickness of 15 $\mu$m and in which the average crystal grain size is 30 $\mu$m in the quantity of 100 g/m$^2$ and dried. A total of six pieces of slurry applied foil is produced by repeating the same procedure.

Next, five pieces of the obtained slurry applied foil are pressed at different pressing pressures to produce electrodes having the electrode densities of 2.0 g/cm$^3$ (comparative example A-1), 2.1 g/cm$^3$ (comparative example A-2), 2.2 g/cm$^3$ (comparative example A-3), 2.3 g/cm$^3$ (comparative example A-4), and 2.4 g/cm$^3$ (comparative example A-5).

The remaining one piece of the slurry applied foil obtained as described above is pressed at a pressing pressure larger than the pressing pressure applied in the comparative example A-5 to obtain the electrode density of 2.5 g/cm$^3$, the coating film cracked so that a negative electrode could not be obtained.

<Production of the evaluation cell>

To evaluate output characteristics and cycle life characteristics, three-pole cells for evaluation of the comparative examples A-1 to A-5 are produced according to the same procedure as the procedure in Production Example 1 except that the electrodes in the comparative examples A-1 to A-5 are used as negative electrodes respectively.

<Evaluation>

Output characteristics and cycle life characteristics of the evaluation cells in the comparative examples A-1 to A-5 are evaluated according to the same procedure as the procedure in Production Example 1 series.

After the evaluation, like in Production Example 1 series, the electrode layers of the electrodes in the comparative examples A-1 to A-5 are submitted to pore diameter distribution measurements by the mercury porosimetry.

<Results>

The density, the pore volume of the electrode layer obtained from the pore diameter distribution measurements by the mercury porosimetry, and the mode diameter and the median diameter of voids of electrodes in the comparative examples A-1 to A-5 are shown in Table 7 below.

[Table 7]

| Production Example A for comparison [$TiO_2$(B)] | | | | |
|---|---|---|---|---|
| | Electrode density | Pore volume (mL/g) | Median diameter (volume) ($\mu$m) | Mode diameter (volume) ($\mu$m) |
| Comparative example A-1 | 2.0 g/cm$^3$ | 0.156 | 0.081 | 0.42 |
| Comparative example A-2 | 2.1 g/cm$^3$ | 0.135 | 0.062 | 0.41 |

(continued)

| Production Example A for comparison [TiO$_2$(B)] | | | | |
| --- | --- | --- | --- | --- |
| | Electrode density | Pore volume (mL/g) | Median diameter (volume) (μm) | Mode diameter (volume) (μm) |
| Comparative example A-3 | 2.2 g/cm$^3$ | 0.119 | 0.051 | 0.40 |
| Comparative example A-4 | 2.3 g/cm$^3$ | 0.099 | 0.040 | 0.39 |
| Comparative example A-5 | 2.4 g/cm$^3$ | 0.081 | 0.035 | 0.36 |

As is evident from Table 7, the pore volume, the median diameter, and the mode diameter of the electrode layers of electrodes produced in Production Example A decrease with an increasing electrode density after pressing. However, the mode diameter is larger than 0.2 μm even in the comparative example A-4 in which the mode diameter is the smallest. Also, the electrode layer cracked as described above when the pressing pressure was increased to obtain an electrode density larger than in the comparative example A-4. That is, in Production Example A, an electrode whose mode diameter on the pore diameter distribution of the electrode layer is 0.2 μm or less cannot be obtained.
Output characteristics of the evaluation cells in the comparative examples A-1 to A-5 are shown in Table 8 and cycle life characteristics thereof are shown in Table 9.

[Table 8]

| Production Example A for comparison<Output characteristics> | | | | | | | |
| --- | --- | --- | --- | --- | --- | --- | --- |
| | Mode diameter (volume) (μm) | Discharge capacity maintenance factor | | | | | |
| | | 0.2C | 1C | 2C | 3C | 4C | 5C |
| Comparative example A-1 | 0.42 | 96.1% | 91.5% | 78.4% | 58.8% | 39.4% | 19.2% |
| Comparative example A-2 | 0.41 | 97.1% | 90.4% | 76.1% | 59.6% | 37.4% | 20.4% |
| Comparative example A-3. | 0.40 | 97.8% | 92.3% | 79.1% | 60.4% | 38.1% | 19.4% |
| Comparative example A-4 | 0.39 | 96.8% | 92.4% | 75.4% | 62.4% | 39.1% | 19.9% |
| Comparative example A-5 | 0.36 | 98.1% | 90.5% | 77.9% | 61.4% | 38.2% | 19.8% |

[Table 9]

| Production Example A for comparison <Cycle life characteristics> | | | | |
| --- | --- | --- | --- | --- |
| | Mode diameter (volume) (μm) | Discharge capacity maintenance factor | | |
| | | 1cyc | 45cyc | 90cyc |
| Comparative example A-1 | 0.42 | 100.0% | 74.1% | 59.5% |
| Comparative example A-2 | 0.41 | 100.0% | 75.5% | 60.4% |
| Comparative example A-3 | 0.40 | 100.0% | 72.4% | 61.5% |
| Comparative example A-4 | 0.39 | 100.0% | 73.9% | 57.8% |
| Comparative example A-5 | 0.36 | 100.0% | 74.5% | 59.1% |

As shown in Tables 8 and 9, the evaluation cells in the comparative examples A-1 to A-5 exhibit comparable output characteristics and cycle life characteristics. These characteristics are inferior to those of the evaluations cells in the embodiments 1-1 to 1-3 and the embodiments 2-1 to 2-3.

[Production Example B]

<Production of the electrode>

In Production Example B, electrodes in comparative examples B-1 to B-5 are produced by following the procedure described below.

In Production Example B, a slurry containing an active material is prepared in the same manner as in Production Example 1 except that the powder of $Li_4Ti_5O_{12}$ in which the average particle size is 5 $\mu$m and the Li occlusion/emission potential is higher than the potential of metal lithium by more than 1.0 V is used as the active material.

The slurry is applied to aluminum foil having a thickness of 15 $\mu$m and in which the average crystal grain size is 30 $\mu$m in the quantity of 100 g/m$^2$ and dried. A total of five pieces of slurry applied foil is produced by repeating the same procedure.

Next, the obtained five pieces of slurry applied foil are pressed at different pressing pressures to produce electrodes having the electrode densities of 1.7 g/cm$^3$ (comparative example B-1), 1.9 g/cm$^3$ (comparative example B-2), 2.1 g/cm$^3$ (comparative example B-3), 2.3 g/cm$^3$ (comparative example B-4), and 2.5 g/cm$^3$ (comparative example B-5).

<Production of the evaluation cell>

To evaluate output characteristics and cycle life characteristics, three-pole cells for evaluation of the comparative examples B-1 to B-5 are produced according to the same procedure as the procedure in Production Example 1 except that the electrodes in the comparative examples B-1 to B-5 are used as negative electrodes respectively.

<Evaluation>

Output characteristics and cycle life characteristics of the evaluation cells in the comparative examples B-1 to B-5 are evaluated according to the same procedure as the procedure in Production Example 1 series.

After the evaluation, like in Production Example 1 series, the electrode layers of the electrodes in the comparative examples B-1 to B-5 are submitted to pore diameter distribution measurements by the mercury porosimetry.

<Results>

The density, the pore volume of the electrode layer obtained from the pore diameter distribution measurements by the mercury porosimetry, and the mode diameter and the median diameter of voids of electrodes in the comparative examples B-1 to B-5 are shown in Table 10 below.

[Table 10]

| Production Example B for comparison [$Li_4Ti_5O_{12}$] | | | | |
|---|---|---|---|---|
| | Electrode density | Pore volume (mL/g) | Median diameter (volume) ($\mu$m) | Mode diameter (volume) ($\mu$m) |
| Comparative example B-1 | 1.7 g/cm$^3$ | 0.285 | 0.154 | 0.16 |
| Comparative example B-2 | 1.9 g/cm$^3$ | 0.190 | 0.101 | 0.10 |
| Comparative example B-3 | 2.1 g/cm$^3$ | 0.154 | 0.079 | 0.08 |
| Comparative example B-4 | 2.3 g/cm$^3$ | 0.140 | 0.071 | 0.07 |
| Comparative example B-5 | 2.5 g/cm$^3$ | 0.131 | 0.062 | 0.06 |

It is clear from Table 10 that the pore volume, the median diameter, and the mode diameter of the electrode layers of electrodes produced in Production Example B decrease with an increasing electrode density after pressing.

Output characteristics of the evaluation cells in the comparative examples B-1 to B-5 are shown in Table 11 and cycle life characteristics thereof are shown in Table 12.

[Table 11]

| Production Example B for comparison<Output characteristics> | | | | | | | |
|---|---|---|---|---|---|---|---|
| | Mode diameter (volume) ($\mu$m) | Discharge capacity maintenance factor | | | | | |
| | | 0.2C | 1C | 2C | 3C | 4C | 5C |
| Comparative example B-1 | 0.16 | 99.4% | 97.4% | 93.4% | 90.4% | 80.8% | 73.0% |
| Comparative example B-2 | 0.10 | 99.0% | 97.6% | 94.1% | 88.4% | 82.4% | 74.4% |
| Comparative example B-3 | 0.08 | 99.2% | 97.2% | 92.1% | 89.3% | 80.4% | 72.8% |
| Comparative example B-4 | 0.07 | 99.4% | 97.0% | 94.0% | 87.5% | 81.4% | 71.9% |
| Comparative example B-5 | 0.06 | 99.1% | 97.8% | 94.5% | 88.4% | 81.7% | 73.7% |

[Table 12]

| Production Example B for comparison<Cycle life characteristics> | | | | |
|---|---|---|---|---|
| | Mode diameter (volume) ($\mu$m) | Discharge capacity maintenance factor | | |
| | | 1cyc | 45cyc | 90cyc |
| Comparative example B-1 | 0.16 | 100.0% | 97.4% | 91.4% |
| Comparative example B-2 | 0.10 | 100.0% | 96.9% | 91.0% |
| Comparative example B-3 | 0.08 | 100.0% | 97.1% | 91.0% |
| Comparative example B-4 | 0.07 | 100.0% | 97.4% | 91.9% |
| Comparative example B-5 | 0.06 | 100.0% | 97.4% | 92.0% |

As shown in Tables 11 and 12, the evaluation cells in the comparative examples B-1 to B-5 exhibit comparable output characteristics and cycle life characteristics. The electrodes in the comparative examples B-1, B-2 have the mode diameter in the pore diameter distribution of the electrode layer within the range of 0.1 $\mu$m to 0.2 $\mu$m. On the other hand, the electrodes in the comparative examples B-3 to B-5 have the mode diameter in the pore diameter distribution of the electrode layer deviating from the range of 0.1 $\mu$m to 0.2 $\mu$m. It is clear from the above results that an electrode containing only powder of $Li_4Ti_5O_{12}$ as an active material without containing niobium-titanium composite oxide cannot obtain an effect of improvements in output characteristics and cycle life characteristics even if the mode diameter in the pore diameter distribution of the electrode layer is within the range of 0.1 $\mu$m to 0.2 $\mu$m.

[Production Example 3]

In Production Example 3, five electrodes are produced according to the same procedure as the procedure in Production Example 1 except that the powder of $Nb_2Ti_2O_{19}$ in which the average secondary particle size is 11 $\mu$m and the Li occlusion/emission potential is higher than the potential of metal lithium by more than 1.0 V is used as the active material. The obtained electrodes are electrodes having electrode densities of 2.4 g/cm$^3$ (embodiment 3-1), 2.5 g/cm$^3$ (embodiment 3-2), 2.6 g/cm$^3$ (embodiment 3-3), 2.7 g/cm$^3$ (comparative example 3-1), and 2.8 g/cm$^3$ (comparative example 3-2).

In Production Example 3, three-pole cells for evaluation of the embodiments 3-1 to 3-3 and the comparative examples 3-1, 3-2 are produced according to the same procedure as the procedure in Production Example 1 except that the above electrodes are used as negative electrodes.

<Evaluation>

Output characteristics and cycle life characteristics of the evaluation cells in the embodiments 3-1 to 3-3 and the comparative examples 3-1, 3-2 are evaluated according to the same procedure as the procedure in Production Example 1 series.

After the evaluation, like in Production Example 1 series, the electrode layers of the electrodes in the embodiments 3-1 to 3-3 and the comparative examples 3-1, 3-2 are submitted to pore diameter distribution measurements by the mercury porosimetry.

<Results>

The density, the pore volume of the electrode layer obtained from the pore diameter distribution measurements by the mercury porosimetry, and the mode diameter and the median diameter of voids of electrodes in the embodiments 3-1 to 3-3 and the comparative examples 3-1, 3-2 are shown in Table 13 below.

[Table 13]

| Production Example 3 [$Nb_2Ti_2O_{19}$] | | | | |
|---|---|---|---|---|
| | Electrode density | Pore volume (mL/g) | Median diameter (volume) ($\mu$m) | Mode diameter (volume) ($\mu$m) |
| Embodiment 3-1 | 2.4 g/cm$^3$ | 0.175 | 0.17 | 0 . 16 |
| Embodiment 3-2 | 2.5 g/cm$^3$ | 0.145 | 0.13 | 0.14 |
| Embodiment 3-3 | 2.6 g/cm$^3$ | 0.122 | 0.11 | 0.12 |
| Comparative example 3-1 | 2.7 g/cm$^3$ | 0.114 | 0.09 | 0.08 |
| Comparative example 3-2 | 2.8 g/cm$^3$ | 0.096 | 0.08 | 0.07 |

It is clear from Table 13 that the pore volume, the median diameter, and the mode diameter of the electrode layers of electrodes produced in Production Example 3 decrease with an increasing electrode density after pressing.
Output characteristics of the evaluation cells in the embodiments 3-1 to 3-3 and the comparative examples 3-1, 3-2 are shown in Table 14 and cycle life characteristics thereof are shown in Table 15.

[Table 14]

| Production Example 3 <Output characteristics> | | | | | | | |
|---|---|---|---|---|---|---|---|
| | Mode diameter (volume) ($\mu$m) | Discharge capacity maintenance factor | | | | | |
| | | 0.2C | 1C | 2C | 3C | 4C | 5C |
| Embodiment 3-1 | 0.16 | 100.0% | 95.0% | 91.7% | 87.5% | 73.5% | 53.2% |
| Embodiment 3-2 | 0.14 | 100.0% | 94.7% | 91.8% | 86.7% | 73.7% | 54.2% |
| Embodiment 3-3 | 0.12 | 100.0% | 94.0% | 91.1% | 84.3% | 68.3% | 50.6% |
| Comparative example 3-1 | 0.08 | 100.0% | 94.1% | 90.6% | 83.3% | 64.6% | 47.0% |
| Comparative example 3-2 | 0.07 | 100.0% | 94.4% | 90.3% | 79.9% | 61.1% | 44.5% |

[Table 15]

| Production Example 3 <Cycle life characteristics> | | | | |
|---|---|---|---|---|
| | Mode diameter (volume) ($\mu$m) | Discharge capacity maintenance factor | | |
| | | 1cyc | 45cyc | 90cyc |
| Embodiment 3-1 | 0.16 | 100.0% | 93.8% | 87.0% |
| Embodiment 3-2 | 0.14 | 100.0% | 93.8% | 88.2% |
| Embodiment 3-3 | 0.12 | 100.0% | 93.2% | 87.5% |
| Comparative example 3-1 | 0.08 | 100.0% | 91.9% | 71.3% |
| Comparative example 3-2 | 0.07 | 100.0% | 90.5% | 67.9% |

From the results shown in Table 14, it is clear that the evaluation cells in the embodiments 3-1 to 3-3 in which the mode diameter in the pore diameter distribution of the electrode layer obtained by the mercury porosimetry is in the range of 0.1 $\mu$m to 0.2 $\mu$m are superior in output characteristics to the evaluation cells in the comparative examples 3-1, 3-2 in which the mode diameter is less than 0.1 $\mu$m. It is clear that particularly the evaluation cells in the embodiments 3-1, 3-2 can exhibit more excellent output characteristics.

From the results shown in Table 15, it is clear that the evaluation cells in the embodiments 3-1 to 3-3 in which the mode diameter in the pore diameter distribution of the electrode layer obtained by the mercury porosimetry is in the range of 0.1 $\mu$m to 0.2 $\mu$m are far superior in cycle life characteristics to the evaluation cells in the comparative examples 3-1, 3-2 in which the mode diameter is less than 0.1 $\mu$m. It is clear that particularly the evaluation cell in the embodiment 3-2 can exhibit particularly excellent cycle life characteristics.

On the other hand, in the evaluation cells in the comparative examples 3-1, 3-2, the mode diameter in the pore diameter distribution of the electrode layer of the electrodes in the comparative examples 3-1, 3-2 as negative electrodes is less than 0.1 $\mu$m and thus, the electrolytic solution is less likely to penetrate into the negative electrode and as a result, the supply of lithium ions to the electrode layer during charge and discharge cycle is considered to be insufficient. The lithium ions are needed for electrochemical reactions of the active material. In addition, the negative electrode layer in the evaluation cells in the comparative examples 3-1, 3-2 cracked due to the charge and discharge cycle.

[Production Example 4]

In Production Example 4, five electrodes are produced according to the same procedure as the procedure in Production Example 1 except that the powder of $Nb_{10}Ti_2O_{29}$ in which the average secondary particle size is 12 $\mu$m and the Li occlusion/emission potential is higher than the potential of metal lithium by more than 1.0 V is used as the active material. The obtained electrodes are electrodes having electrode densities of 2.4 g/cm$^3$ (embodiment 4-1), 2.5 g/cm$^3$ (embodiment 4-2), 2.6 g/cm$^3$ (embodiment 4-3), 2.7 g/cm$^3$ (comparative example 4-1), and 2.8 g/cm$^3$ (comparative example 4-2).

In Production Example 4, three-pole cells for evaluation of the embodiments 4-1 to 4-3 and the comparative examples 4-1, 4-2 are produced according to the same procedure as the procedure in Production Example 1 except that the above electrodes are used as negative electrodes.

<Evaluation>

Output characteristics and cycle life characteristics of the evaluation cells in the embodiments 4-1 to 4-3 and the comparative examples 4-1, 4-2 are evaluated according to the same procedure as the procedure in Production Example 1 series.

After the evaluation, like in Production Example 1 series, the electrode layers of the electrodes in the embodiments 4-1 to 4-3 and the comparative examples 4-1, 4-2 are submitted to pore diameter distribution measurements by the mercury porosimetry.

<Results>

The density, the pore volume of the electrode layer obtained from the pore diameter distribution measurements by the mercury porosimetry, and the mode diameter and the median diameter of voids of electrodes in the embodiments 4-1 to 4-3 and the comparative examples 4-1, 4-2 are shown in Table 16 below.

[Table 16]

| Production Example 4 [$Nb_{10}Ti_2O_{29}$] | | | | |
|---|---|---|---|---|
| | Electrode density | Pore volume (mL/g) | Median diameter (volume) ($\mu$m) | Mode diameter (volume) ($\mu$m) |
| Embodiment 4-1 | 2.4 g/cm$^3$ | 0.177 | 0.17 | 0.17 |
| Embodiment 4-2 | 2.5 g/cm$^3$ | 0.146 | 0.14 | 0.14 |
| Embodiment 4-3 | 2.6 g/cm$^3$ | 0.130 | 0.12 | 0.12 |
| Comparative example 4-1 | 2.7 g/cm$^3$ | 0.113 | 0.10 | 0.09 |

(continued)

| Production Example 4 [$Nb_{10}Ti_2O_{29}$] | | | | |
| --- | --- | --- | --- | --- |
| | Electrode density | Pore volume (mL/g) | Median diameter (volume) ($\mu$m) | Mode diameter (volume) ($\mu$m) |
| Comparative example 4-2 | 2.8 g/cm$^3$ | 0.105 | 0.09 | 0.08 |

It is clear from Table 16 that the pore volume, the median diameter, and the mode diameter of the electrode layers of electrodes produced in Production Example 4 decrease with an increasing electrode density after pressing.

Output characteristics of the evaluation cells in the embodiments 4-1 to 4-3 and the comparative examples 4-1, 4-2 are shown in Table 17 and cycle life characteristics thereof are shown in Table 18.

[Table 17]

| Production Example 4 <Output characteristics> | | | | | | | |
| --- | --- | --- | --- | --- | --- | --- | --- |
| | Mode diameter (volume) ($\mu$m) | Discharge capacity maintenance factor | | | | | |
| | | 0.2C | 1C | 2C | 3C | 4C | 5C |
| Embodiment 4-1 | 0.17 | 100.0% | 95.0% | 91.5% | 86.0% | 72.3% | 52.3% |
| Embodiment 4-2 | 0.14 | 100.0% | 94.8% | 91.3% | 85.9% | 72.8% | 52.9% |
| Embodiment 4-3 | 0.12 | 100.0% | 93.4% | 90.1% | 83.0% | 69.0% | 49.3% |
| Comparative example 4-1- | 0.09 | 100.0% | 92.8% | 89.3% | 83.3% | 63.9% | 47.6% |
| Comparative example 4-2 | 0.08 | 100.0% | 94.3% | 88.7% | 78.8% | 60.6% | 44.3% |

[Table 18]

| Production Example 4 <Cycle life characteristics> | | | | |
| --- | --- | --- | --- | --- |
| | Mode diameter (volume) ($\mu$m) | Discharge capacity maintenance factor | | |
| | | 1cyc | 45cyc | 90cyc |
| Embodiment 4-1 | 0.17 | 100.0% | 93.7% | 86.8% |
| Embodiment 4-2 | 0.14 | 100.0% | 94.6% | 87.8% |
| Embodiment 4-3 | 0.12 | 100.0% | 92.6% | 86.9% |
| Comparative example 4-1 | 0.09 | 100.0% | 91.1% | 80.8% |
| Comparative example 4-2 | 0.08 | 100.0% | 90.1% | 78.6% |

From the results shown in Table 17, it is clear that the evaluation cells in the embodiments 4-1 to 4-3 in which the mode diameter in the pore diameter distribution of the electrode layer obtained by the mercury porosimetry is in the range of 0.1 $\mu$m to 0.2 $\mu$m are superior in output characteristics to the evaluation cells in the comparative examples 4-1, 4-2 in which the mode diameter is less than 0.1 $\mu$m. It is clear that particularly the evaluation cells in the embodiments 4-1, 4-2 can exhibit more excellent output characteristics.

From the results shown in Table 18, it is clear that the evaluation cells in the embodiments 4-1 to 4-3 in which the mode diameter in the pore diameter distribution of the electrode layer obtained by the mercury porosimetry is in the range of 0.1 $\mu$m to 0.2 $\mu$m are far superior in cycle life characteristics to the evaluation cells in the comparative examples 4-1, 4-2 in which the mode diameter is less than 0.1 $\mu$m. It is clear that particularly the evaluation cell in the embodiment 4-2 can exhibit particularly excellent cycle life characteristics.

On the other hand, in the evaluation cells in the comparative examples 4-1, 4-2, the mode diameter in the pore diameter distribution of the electrode layer of the electrodes in the comparative examples 4-1, 4-2 as negative electrodes is less than 0.1 $\mu$m and thus, the electrolytic solution is less likely to penetrate into the negative electrode and therefore, the supply of lithium ions to the electrode layer during charge and discharge cycle is considered to be insufficient. The lithium ions are needed for electrochemical reactions of the active material. In addition, the negative electrode layer in the evaluation cells in the comparative examples 4-1, 4-2 cracked due to the charge and discharge cycle.

[Production Example 5]

In Production Example 5, five electrodes are produced according to the same procedure as the procedure in Production Example 1 except that the powder of $Nb_{24}TiO_{62}$ in which the average secondary particle size is 15 $\mu$m and the Li occlusion/emission potential is higher than the potential of metal lithium by more than 1.0 V is used as the active material. The obtained electrodes are electrodes having electrode densities of 2.4 g/cm$^3$ (embodiment 5-1), 2.5 g/cm$^3$ (embodiment 5-2), 2.6 g/cm$^3$ (embodiment 5-3), 2.7 g/cm$^3$ (comparative example 5-1), and 2.8 g/cm$^3$ (comparative example 5-2).

In Production Example 5, three-pole cells for evaluation of the embodiments 5-1 to 5-3 and the comparative examples 5-1, 5-2 are produced according to the same procedure as the procedure in Production Example 1 except that the above electrodes are used as negative electrodes.

<Evaluation>

Output characteristics and cycle life characteristics of the evaluation cells in the embodiments 5-1 to 5-3 and the comparative examples 5-1, 5-2 are evaluated according to the same procedure as the procedure in Production Example 1 series .

After the evaluation, like in Production Example 1 series, the electrode layers of the electrodes in the embodiments 5-1 to 5-3 and the comparative examples 5-1, 5-2 are submitted to pore diameter distribution measurements by the mercury porosimetry.

<Results>

The density, the pore volume of the electrode layer obtained from the pore diameter distribution measurements by the mercury porosimetry, and the mode diameter and the median diameter of voids of electrodes in the embodiments 5-1 to 5-3 and the comparative examples 5-1, 5-2 are shown in Table 19 below.

[Table 19]

| Production Example 5 [$Nb_{24}TiO_{62}$] | | | | |
|---|---|---|---|---|
| | Electrode density | Pore volume (mL/g) | Median diameter (volume) ($\mu$m) | Mode diameter (volume) ($\mu$m) |
| Embodiment 5-1 | 2.4 g/cm$^3$ | 0.176 | 0. 16 | 0.16 |
| Embodiment 5-2 | 2.5 g/cm$^3$ | 0.146 | 0.13 | 0.13 |
| Embodiment 5-3 | 2.6 g/cm$^3$ | 0.128 | 0.12 | 0.12 |
| Comparative example 5-1 | 2.7 g/cm$^3$ | 0.113 | 0.09 | 0.08 |
| Comparative example 5-2 | 2.8 g/cm$^3$ | 0.103 | 0.08 | 0.07 |

It is clear from Table 19 that the pore volume, the median diameter, and the mode diameter of the electrode layers of electrodes produced in Production Example 5 decrease with an increasing electrode density after pressing.

Output characteristics of the evaluation cells in the embodiments 5-1 to 5-3 and the comparative examples 5-1, 5-2 are shown in Table 20 and cycle life characteristics thereof are shown in Table 21.

[Table 20]

| Production Example 5 <Output characteristics> | | | | | | | |
|---|---|---|---|---|---|---|---|
| | Mode diameter (volume) ($\mu$m) | Discharge capacity maintenance factor | | | | | |
| | | 0.2C | 1C | 2C | 3C | 4C | 5C |
| Embodiment 5-1 | 0.16 | 100.0% | 92.0% | 88.6% | 83.3% | 74.2% | 58.4% |

(continued)

| Production Example 5 <Output characteristics> | | | | | | | |
|---|---|---|---|---|---|---|---|
| | Mode diameter (volume) ($\mu$m) | Discharge capacity maintenance factor | | | | | |
| | | 0.2C | 1C | 2C | 3C | 4C | 5C |
| Embodiment 5-2 | 0.13 | 100.0% | 92.2% | 90.7% | 80.8% | 73.5% | 57.5% |
| Embodiment 5-3 | 0.12 | 100.0% | 90.5% | 90.2% | 82.6% | 71.5% | 55.5% |
| Comparative example 5-1 | 0.08 | 100.0% | 87.2% | 81.1% | 76.2% | 64.1% | 42.2% |
| Comparative example 5-2 | 0.07 | 100.0% | 84.5% | 80.3% | 72.2% | 55.9% | 38.5% |

[Table 21]

| Production Example 5 <Cycle life characteristics> | | | | |
|---|---|---|---|---|
| | Mode diameter (volume) ($\mu$m) | Discharge capacity maintenance factor | | |
| | | 1cyc | 45cyc | 90cyc |
| Embodiment 5-1 | 0.16 | 100.0% | 94.9% | 82.8% |
| Embodiment 5-2 | 0.13 | 100.0% | 92.7% | 80.3% |
| Embodiment 5-3 | 0.12 | 100.0% | 90.4% | 75.9% |
| Comparative example 5-1 | 0.08 | 100.0% | 79.8% | 67.3% |
| Comparative example 5-2 | 0.07 | 100.0% | 74.7% | 60.8% |

From the results shown in Table 20, it is clear that the evaluation cells in the embodiments 5-1 to 5-3 in which the mode diameter in the pore diameter distribution of the electrode layer obtained by the mercury porosimetry is in the range of 0.1 $\mu$m to 0.2 $\mu$m are superior in output characteristics to the evaluation cells in the comparative examples 5-1, 5-2 in which the mode diameter is less than 0.1 $\mu$m. It is clear that particularly the evaluation cells in the embodiments 5-1, 5-2 can exhibit more excellent output characteristics.

From the results shown in Table 21, it is clear that the evaluation cells in the embodiments 5-1 to 5-3 in which the mode diameter in the pore diameter distribution of the electrode layer obtained by the mercury porosimetry is in the range of 0.1 $\mu$m to 0.2 $\mu$m are far superior in cycle life characteristics to the evaluation cells in the comparative examples 5-1, 5-2 in which the mode diameter is less than 0.1 $\mu$m. It is clear that particularly the evaluation cells in the embodiments 5-1, 5-2 can exhibit particularly excellent cycle life characteristics.

On the other hand, in the evaluation cells in the comparative examples 5-1, 5-2, the mode diameter in the pore diameter distribution of the electrode layer of the electrodes in the comparative examples 5-1, 5-2 as negative electrodes is less than 0.1 $\mu$m and thus, the electrolytic solution is less likely to penetrate into the negative electrode and therefore, the supply of lithium ions to the electrode layer during charge and discharge cycle is considered to be insufficient. The lithium ions are needed for electrochemical reactions of the active material. In addition, the negative electrode layer in the evaluation cells in the comparative examples 5-1, 5-2 cracked due to the charge and discharge cycle.

[Production Example 6]

In Production Example 6, five electrodes are produced according to the same procedure as the procedure in Production Example 1 except that the powder of $Nb_{14}TiO_{37}$ in which the average secondary particle size is 14 $\mu$m and the Li occlusion/emission potential is higher than the potential of metal lithium by more than 1.0 V is used as the active material. The obtained electrodes are electrodes having electrode densities of 2.4 g/cm$^3$ (embodiment 6-1), 2.5 g/cm$^3$ (embodiment 6-2), 2.6 g/cm$^3$ (embodiment 6-3), 2.7 g/cm$^3$ (comparative example 6-1), and 2.8 g/cm$^3$ (comparative example 6-2).

In Production Example 6, three-pole cells for evaluation of the embodiments 6-1 to 6-3 and the comparative examples 6-1, 6-2 are produced according to the same procedure as the procedure in Production Example 1 except that the above electrodes are used as negative electrodes.

<Evaluation>

Output characteristics and cycle life characteristics of the evaluation cells in the embodiments 6-1 to 6-3 and the comparative examples 6-1, 6-2 are evaluated according to the same procedure as the procedure in Production Example 1 series.

After the evaluation, like in Production Example 1 series, the electrode layers of the electrodes in the embodiments 6-1 to 6-3 and the comparative examples 6-1, 6-2 are submitted to pore diameter distribution measurements by the mercury porosimetry.

<Results>

The density, the pore volume of the electrode layer obtained from the pore diameter distribution measurements by the mercury porosimetry, and the mode diameter and the median diameter of voids of electrodes in the embodiments 6-1 to 6-3 and the comparative examples 6-1, 6-2 are shown in Table 22 below.

[Table 22]

| Production Example 6 [$Nb_{14}TiO_{37}$] | | | | |
|---|---|---|---|---|
| | Electrode density | Pore volume (mL/g) | Median diameter (volume) ($\mu$m) | Mode diameter (volume) ($\mu$m) |
| Embodiment 6-1 | 2.4 g/cm$^3$ | 0.177 | 0.17 | 0.17 |
| Embodiment 6-2 | 2.5 g/cm$^3$ | 0.148 | 0.14 | 0.14 |
| Embodiment 6-3 | 2.6 g/cm$^3$ | 0.129 | 0.12 | 0.12 |
| Comparative example 6-1 | 2.7 g/cm$^3$ | 0.114 | 0.10 | 0.09 |
| Comparative example 6-2 | 2.8 g/cm$^3$ | 0.105 | 0.09 | 0.08 |

It is clear from Table 22 that the pore volume, the median diameter, and the mode diameter of the electrode layers of electrodes produced in Production Example 6 decrease with an increasing electrode density after pressing.

Output characteristics of the evaluation cells in the embodiments 6-1 to 6-3 and the comparative examples 6-1, 6-2 are shown in Table 23 and cycle life characteristics thereof are shown in Table 24.

[Table 23]

| Production Example 6 <Output characteristics> | | | | | | | |
|---|---|---|---|---|---|---|---|
| | Mode diameter (volume) ($\mu$m) | Discharge capacity maintenance factor | | | | | |
| | | 0.2C | 1C | 2C | 3C | 4C | 5C |
| Embodiment 6-1 | 0.17 | 100.0% | 93.0% | 86.0% | 79.3% | 66.1% | 54.9% |
| Embodiment 6-2 | 0.14 | 100.0% | 94.6% | 89.8% | 80.3% | 67.0% | 55.6% |
| Embodiment 6-3 | 0.12 | 100.0% | 92.7% | 84.6% | 76.5% | 65.1% | 50.9% |
| Comparative example 6-1 | 0.09 | 100.0% | 89.6% | 80.9% | 69.4% | 55.3% | 36.5% |
| Comparative example 6-2 | 0.08 | 100.0% | 89.4% | 75.3% | 61.2% | 44.6% | 22.4% |

[Table 24]

| Production Example 6 <Cycle life characteristics> | | | | |
|---|---|---|---|---|
| | Mode diameter (volume) ($\mu$m) | Discharge capacity maintenance factor | | |
| | | 1cyc | 45cyc | 90cyc |
| Embodiment 6-1 | 0.17 | 100.0% | 92.2% | 78.6% |

(continued)

| Production Example 6 <Cycle life characteristics> | | | | |
|---|---|---|---|---|
| | Mode diameter (volume) (μm) | Discharge capacity maintenance factor | | |
| | | 1cyc | 45cyc | 90cyc |
| Embodiment 6-2 | 0.14 | 100.0% | 89.6% | 76.5% |
| Embodiment 6-3 | 0.12 | 100.0% | 86.9% | 78.1% |
| Comparative example 6-1 | 0.09 | 100.0% | 76.0% | 69.2% |
| Comparative example 6-2 | 0.08 | 100.0% | 73.0% | 61.6% |

From the results shown in Table 23, it is clear that the evaluation cells in the embodiments 6-1 to 6-3 in which the mode diameter in the pore diameter distribution of the electrode layer obtained by the mercury porosimetry is in the range of 0.1 μm to 0.2 μm are superior in output characteristics to the evaluation cells in the comparative examples 6-1, 6-2 in which the mode diameter is less than 0.1 μm. It is clear that particularly the evaluation cells in the embodiments 6-2, 6-3 can exhibit more excellent output characteristics.

From the results shown in Table 24, it is clear that the evaluation cells in the embodiments 6-1 to 6-3 in which the mode diameter in the pore diameter distribution of the electrode layer obtained by the mercury porosimetry is in the range of 0.1 μm to 0.2 μm are far superior in cycle life characteristics to the evaluation cells in the comparative examples 6-1, 6-2 in which the mode diameter is less than 0.1 μm. It is clear that particularly the evaluation cells in the embodiments 6-1, 6-3 can exhibit particularly excellent cycle life characteristics.

On the other hand, in the evaluation cells in the comparative examples 6-1, 6-2, the mode diameter in the pore diameter distribution of the electrode layer of the electrodes in the comparative examples 6-1, 6-2 as negative electrodes is less than 0.1 μm and thus, the electrolytic solution is less likely to penetrate into the negative electrode and therefore, the supply of lithium ions to the electrode layer during charge and discharge cycle is considered to be insufficient. The lithium ions are needed for electrochemical reactions of the active material. In addition, the negative electrode layer in the evaluation cells in the comparative examples 6-1, 6-2 cracked due to the charge and discharge cycle.

[Production Example 7]

In Production Example 7, five electrodes are produced according to the same procedure as the procedure in Production Example 1 except that the powder of $Nb_2TiO_7$ in which the average secondary particle size is 10 μm and the Li occlusion/emission potential is higher than the potential of metal lithium by more than 1.0 V and the powder of $Li_4Ti_5O_{12}$ in which the average secondary particle size is 1 μm and the Li occlusion/emission potential is higher than the potential of metal lithium by more than 1.0 V are used as the active materials. The weight ratio of $Nb_2TiO_7$ and $Li_4Ti_5O_{12}$ in the active materials is set to 50:50. The obtained electrodes are electrodes having electrode densities of 2.4 g/cm$^3$ (embodiment 7-1), 2.5 g/cm$^3$ (embodiment 7-2), 2.6 g/cm$^3$ (embodiment 7-3), 2.7 g/cm$^3$ (comparative example 7-1), and 2.8 g/cm$^3$ (comparative example 7-2).

In Production Example 7, three-pole cells for evaluation of the embodiments 7-1 to 7-3 and the comparative examples 7-1, 7-2 are produced according to the same procedure as the procedure in Production Example 1 except that the above electrodes are used as negative electrodes.

<Evaluation>

Output characteristics and cycle life characteristics of the evaluation cells in the embodiments 7-1 to 7-3 and the comparative examples 7-1, 7-2 are evaluated according to the same procedure as the procedure in Production Example 1 series.

After the evaluation, like in Production Example 1 series, the electrode layers of the electrodes in the embodiments 7-1 to 7-3 and the comparative examples 7-1, 7-2 are submitted to pore diameter distribution measurements by the mercury porosimetry.

<Results>

The density, the pore volume of the electrode layer obtained from the pore diameter distribution measurements by the mercury porosimetry, and the mode diameter and the median diameter of voids of electrodes in the embodiments 7-1 to 7-3 and the comparative examples 7-1, 7-2 are shown in Table 25 below.

[Table 25]

| Production Example 7 [$Nb_2TiO_7$ + $Li_4Ti_5O_{12}$] | | | | |
|---|---|---|---|---|
| | Electrode density | Pore volume (mL/g) | Median diameter (volume) ($\mu$m) | Mode diameter (volume) ($\mu$m) |
| Embodiment | 2.4 g/cm$^3$ | 0.174 | 0.17 | 0.17 |
| Embodiment 7-2 | 2.5 g/cm$^3$ | 0.144 | 0.13 | 0.14 |
| Embodiment 7-3 | 2.6 g/cm$^3$ | 0.124 | 0.11 | 0.11 |
| Comparative example 7-1 | 2.7 g/cm$^3$ | 0.114 | 0.10 | 0.09 |
| Comparative example 7-2 | 2.8 g/cm$^3$ | 0.105 | 0.09 | 0.07 |

It is clear from Table 25 that the pore volume, the median diameter, and the mode diameter of the electrode layers of electrodes produced in Production Example 7 decrease with an increasing electrode density after pressing.

Output characteristics of the evaluation cells in the embodiments 7-1 to 7-3 and the comparative examples 7-1, 7-2 are shown in Table 26 and cycle life characteristics thereof are shown in Table 27.

[Table 26]

| Production Example 7 <Output characteristics> | | | | | | | |
|---|---|---|---|---|---|---|---|
| | Mode diameter (volume) ($\mu$m) | Discharge capacity maintenance factor | | | | | |
| | | 0.2C | 1C | 2C | 3C | 4C | 5C |
| Embodiment 7-1 | 0.17 | 100.0% | 92.5% | 89.7% | 85.0% | 71.0% | 48.9% |
| Embodiment 7-2 | 0.14 | 100.0% | 94.6% | 87.2% | 83.8% | 73.2% | 49.3% |
| Embodiment 7-3 | 0.11 | 100.0% | 88.2% | 89.4% | 81.2% | 63.0% | 45.9% |
| Comparative example 7-1 | 0.09 | 100.0% | 94.2% | 87.0% | 78.2% | 61.3% | 41.9% |
| Comparative example 7-2 | 0.07 | 100.0% | 90.5% | 85.9% | 76.9% | 59.8% | 39.2% |

[Table 27]

| Production Example 7 <Cycle life characteristics> | | | | |
|---|---|---|---|---|
| | Mode diameter (volume) ($\mu$m) | Discharge capacity maintenance factor | | |
| | | 1cyc | 45cyc | 90cyc |
| Embodiment | 0.17 | 100.0% | 90.4% | 86.6% |
| Embodiment | 0.14 | 100.0% | 91.4% | 84.8% |
| Embodiment 7-3 | 0.11 | 100.0% | 90.6% | 84.9% |
| Comparative example 7-1 | 0.09 | 100.0% | 91.6% | 79.7% |
| Comparative example 7-2 | 0.07 | 100.0% | 87.2% | 72.6% |

From the results shown in Table 26, it is clear that the evaluation cells in the embodiments 7-1 to 7-3 in which the mode diameter in the pore diameter distribution of the electrode layer obtained by the mercury porosimetry is in the range of 0.1 $\mu$m to 0.2 $\mu$m are superior in output characteristics to the evaluation cells in the comparative examples 7-1, 7-2 in which the mode diameter is less than 0.1 $\mu$m. It is clear that particularly the evaluation cells in the embodiments 7-1, 7-2 can exhibit more excellent output characteristics.

From the results shown in Table 27, it is clear that the evaluation cells in the embodiments 7-1 to 7-3 in which the mode diameter in the pore diameter distribution of the electrode layer obtained by the mercury porosimetry is in the range of 0.1 µm to 0.2 µm are far superior in cycle life characteristics to the evaluation cells in the comparative examples 7-1, 7-2 in which the mode diameter is less than 0.1 µm. It is clear that particularly the evaluation cell in the embodiment 7-1 can exhibit particularly excellent cycle life characteristics.

On the other hand, in the evaluation cells in the comparative examples 7-1, 7-2, the mode diameter in the pore diameter distribution of the electrode layer of the electrodes in the comparative examples 7-1, 7-2 as negative electrodes is less than 0.1 µm and thus, the electrolytic solution is less likely to penetrate into the negative electrode and therefore, the supply of lithium ions to the electrode layer during charge and discharge cycle is considered to be insufficient. The lithium ions are needed for electrochemical reactions of the active material. In addition, the negative electrode layer in the evaluation cells in the comparative examples 7-1, 7-2 cracked due to the charge and discharge cycle.

[Production Example 8]

In Production Example 8, five electrodes are produced according to the same procedure as the procedure in Production Example 1 except that the powder of $Nb_{1.4}Ti_{1.3}La_{0.3}O_7$ in which the average secondary particle size is 8 µm and the Li occlusion/emission potential is higher than the potential of metal lithium by more than 1.0 V is used as the active material. The obtained electrodes are electrodes having electrode densities of 2.4 g/cm$^3$ (embodiment 8-1), 2.5 g/cm$^3$ (embodiment 8-2), 2.6 g/cm$^3$ (embodiment 8-3), 2.7 g/cm$^3$ (comparative example 8-1), and 2.8 g/cm$^3$ (comparative example 8-2).

In Production Example 8, three-pole cells for evaluation of the embodiments 8-1 to 8-3 and the comparative examples 8-1, 8-2 are produced according to the same procedure as the procedure in Production Example 1 except that the above electrodes are used as negative electrodes.

<Evaluation>

Output characteristics and cycle life characteristics of the evaluation cells in the embodiments 8-1 to 8-3 and the comparative examples 8-1, 8-2 are evaluated according to the same procedure as the procedure in Production Example 1 series.

After the evaluation, like in Production Example 1 series, the electrode layers of the electrodes in the embodiments 8-1 to 8-3 and the comparative examples 8-1, 8-2 are submitted to pore diameter distribution measurements by the mercury porosimetry.

<Results>

The density, the pore volume of the electrode layer obtained from the pore diameter distribution measurements by the mercury porosimetry, and the mode diameter and the median diameter of voids of electrodes in the embodiments 8-1 to 8-3 and the comparative examples 8-1, 8-2 are shown in Table 28 below.

[Table 28]

| Production Example 8 [$Nb_{1.4}Ti_{1.3}La_{0.3}O_7$] | | | | |
|---|---|---|---|---|
| | Electrode density | Pore volume (mL/g) | Median diameter (volume) (µm) | Mode diameter (volume) (µm) |
| Embodiment 8-1 | 2.4 g/cm$^3$ | 0.176 | 0.17 | 0.17 |
| Embodiment 8-2 | 2.5 g/cm$^3$ | 0.144 | 0.14 | 0.14 |
| Embodiment 8-3 | 2.6 g/cm$^3$ | 0.127 | 0.12 | 0.12 |
| Comparative example 8-1 | 2.7 g/cm$^3$ | 0.114 | 0.10 | 0.09 |
| Comparative example 8-2 | 2.8 g/cm$^3$ | 0.102 | 0.09 | 0.08 |

It is clear from Table 28 that the pore volume, the median diameter, and the mode diameter of the electrode layers of electrodes produced in Production Example 8 decrease with an increasing electrode density after pressing.

Output characteristics of the evaluation cells in the embodiments 8-1 to 8-3 and the comparative examples 8-1, 8-2 are shown in Table 29 and cycle life characteristics thereof are shown in Table 30.

[Table 29]

| Production Example 8 <Output characteristics> | | | | | | | |
|---|---|---|---|---|---|---|---|
| | Mode diameter (volume) ($\mu$m) | Discharge capacity maintenance factor | | | | | |
| | | 0.2C | 1C | 2C | 3C | 4C | 5C |
| Embodiment 8-1 | 0.17 | 100.0% | 95.0% | 92.0% | 87.1% | 73.6% | 53.9% |
| Embodiment 8-2 | 0.14 | 100.0% | 94.9% | 91.7% | 86.8% | 73.3% | 54.5% |
| Embodiment 8-3 | 0.12 | 100.0% | 94.5% | 90.8% | 84.7% | 68.7% | 50.8% |
| Comparative example 8-1 | 0.09 | 100.0% | 94.6% | 90.7% | 83.5% | 65.1% | 47.7% |
| Comparative example 8-2 | 0.08 | 100.0% | 94.5% | 90.0% | 80.1% | 61.0% | 45.4% |

[Table 30]

| Production Example 8 <Cycle life characteristics> | | | | |
|---|---|---|---|---|
| | Mode diameter (volume) ($\mu$m) | Discharge capacity maintenance factor | | |
| | | 1cyc | 45cyc | 90cyc |
| Embodiment 8-1 | 0.17 | 100.0% | 93.6% | 87.5% |
| Embodiment 8-2 | 0.14 | 100.0% | 94.4% | 88.8% |
| Embodiment 8-3 | 0.12 | 100.0% | 93.7% | 87.2% |
| Comparative example 8-1 | 0.09 | 100.0% | 92.4% | 81.8% |
| Comparative example 8-2 | 0.08 | 100.0% | 91.1% | 78.3% |

From the results shown in Table 29, it is clear that the evaluation cells in the embodiments 8-1 to 8-3 in which the mode diameter in the pore diameter distribution of the electrode layer obtained by the mercury porosimetry is in the range of 0.1 $\mu$m to 0.2 $\mu$m are superior in output characteristics to the evaluation cells in the comparative examples 8-1, 8-2 in which the mode diameter is less than 0.1 $\mu$m. It is clear that particularly the evaluation cells in the embodiments 8-1, 8-2 can exhibit more excellent output characteristics.

From the results shown in Table 30, it is clear that the evaluation cells in the embodiments 8-1 to 8-3 in which the mode diameter in the pore diameter distribution of the electrode layer obtained by the mercury porosimetry is in the range of 0.1 $\mu$m to 0.2 $\mu$m are far superior in cycle life characteristics to the evaluation cells in the comparative examples 8-1, 8-2 in which the mode diameter is less than 0.1 $\mu$m. It is clear that particularly the evaluation cell in the embodiment 8-2 can exhibit particularly excellent cycle life characteristics.

On the other hand, in the evaluation cells in the comparative examples 8-1, 8-2, the mode diameter in the pore diameter distribution of the electrode layer of the electrodes in the comparative examples 8-1, 8-2 as negative electrodes is less than 0.1 $\mu$m and thus, the electrolytic solution is less likely to penetrate into the negative electrode and as a result, the supply of lithium ions to the electrode layer during charge and discharge cycle is considered to be insufficient. The lithium ions are needed for electrochemical reactions of the active material. In addition, the negative electrode layer in the evaluation cells in the comparative examples 8-1, 8-2 cracked due to the charge and discharge cycle.

[Production Example 9]

<Production of the electrode>

In Production Example 9, electrodes in an embodiment 9-1 and comparative examples 9-1 to 9-4 are produced according to the procedure described below.

As the active material, C coated $Nb_2TiO_7$ powder in which the particles surfaces are coated with carbon (hereinafter, the C coat) is prepared. The C-coated $Nb_2TiO_7$ powder is prepared as described below.

First, $Nb_2TiO_7$ powder similar to the powder used in Production Example 1 is prepared. The powder is dispersed in an NMP (N-methyl-2-pyrolidone) solution in which PVdF (polyvinylidene difluoride) is dissolved to prepare an $Nb_2TiO_7$ fluid dispersion. The weight ratio of $Nb_2TiO_7$ to the dispersion medium is set to 50%.

On the other hand, a powdered conductive furnace material whose particle size is 30 nm or less is thinly spread over a stainless pan as a dummy powder floor method.

The $Nb_2TiO_7$ fluid dispersion prepared before is dripped onto the spread conductive furnace material and then dried at 150°C for one hour. In this way, the C-coated $Nb_2TiO_7$ powder is obtained. The obtained C-coated $Nb_2TiO_7$ powder has the average secondary particle size of 23 $\mu$m.

In Production Example 9, five electrodes are produced according to the same procedure as the procedure in Production Example 1 except that the obtained C-coated $Nb_2TiO_7$ powder is used as the active material. The obtained electrodes are electrodes having electrode densities of 2.4 $g/cm^3$ (embodiment 9-1), 2.5 $g/cm^3$ (comparative example 9-1), 2.6 $g/cm^3$ (comparative example 9-2), 2.7 $g/cm^3$ (comparative example 9-3), and 2.8 $g/cm^3$ (comparative example 9-4).

In Production Example 9, three-pole cells for evaluation of the embodiment 9-1 and the comparative examples 9-1 to 9-4 are produced according to the same procedure as the procedure in Production Example 1 except that the above electrodes are used as negative electrodes.

<Evaluation>

Output characteristics and cycle life characteristics of the evaluation cells in the embodiment 9-1 and the comparative examples 9-1 to 9-4 are evaluated according to the same procedure as the procedure in Production Example 1 series.

After the evaluation, like in Production Example 1 series, the electrode layers of the electrodes in the embodiment 9-1 and the comparative examples 9-1 to 9-4 are submitted to pore diameter distribution measurements by the mercury porosimetry.

<Results>

The density, the pore volume of the electrode layer obtained from the pore diameter distribution measurements by the mercury porosimetry, and the mode diameter and the median diameter of voids of electrodes in the embodiment 9-1 and the comparative examples 9-1 to 9-4 are shown in Table 31 below.

[Table 31]

| Production Example 9 [$Nb_2TiO_7$ (carbon coat by the powder floor method)] | | | | |
|---|---|---|---|---|
| | Electrode density | Pore volume (mL/g) | Median diameter (volume) ($\mu$m) | Mode diameter (volume) ($\mu$m) |
| Embodiment 9-1 | 2.4 $g/cm^3$ | 0.267 | 0.13 | 0.13 |
| Comparative example 9-1 | 2.5 $g/cm^3$ | 0.190 | 0.08 | 0.09 |
| Comparative example 9-2 | 2.6 $g/cm^3$ | 0.127 | 0.05 | 0.07 |
| Comparative example 9-3 | 2.7 $g/cm^3$ | 0.118 | 0.07 | 0.06 |
| Comparative example 9-4 | 2.8 $g/cm^3$ | 0.114 | 0.04 | 0.06 |

It is clear from Table 31 that the pore volume, the median diameter, and the mode diameter of the electrode layers of electrodes produced in Production Example 9 decrease with an increasing electrode density after pressing.

Output characteristics of the evaluation cells in the embodiment 9-1 and the comparative examples 9-1 to 9-4 are shown in Table 32 and cycle life characteristics thereof are shown in Table 33.

[Table 32]

| Production Example 9 <Output characteristics> | | | | | | | |
|---|---|---|---|---|---|---|---|
| | Mode diameter (volume) ($\mu$m) | Discharge capacity maintenance factor | | | | | |
| | | 0.2C | 1C | 2C | 3C | 4C | 5C |
| Embodiment 9-1 | 0.13 | 100.0% | 96.2% | 85.0% | 72.0% | 54.6% | 36.8% |
| Comparative example 9-1 | 0.09 | 100.0% | 87.9% | 78.0% | 64.4% | 44.6% | 25.7% |
| Comparative example 9-2 | 0.07 | 100.0% | 85.5% | 76.7% | 61.2% | 42.9% | 19.6% |
| Comparative example 9-3 | 0.06 | 100.0% | 84.2% | 69.5% | 54.7% | 35.3% | 11.9% |
| Comparative example 9-4 | 0.06 | 100.0% | 83.4% | 66.7% | 50.6% | 27.4% | 2.4% |

[Table 33]

| Production Example 9 <Cycle life characteristics> | | | | |
|---|---|---|---|---|
| | Mode diameter (volume) ($\mu$m) | Discharge capacity maintenance factor | | |
| | | 1cyc | 45cyc | 90cyc |
| Embodiment 9-1 | 0.13 | 100.00% | 85.0% | 69.8% |
| Comparative example 9-1 | 0.09 | 100.00% | 80.7% | 65.5% |
| Comparative example 9-2 | 0.07 | 100.00% | 74.2% | 60.8% |
| Comparative example 9-3 | 0.06 | 100.00% | 72.9% | 47.9% |
| Comparative example 9-4 | 0.06 | 100.00% | 69.6% | 40.3% |

From the results shown in Table 32, it is clear that the evaluation cell in the embodiment 9-1 in which the mode diameter in the pore diameter distribution of the electrode layer obtained by the mercury porosimetry is in the range of 0.1 $\mu$m to 0.2 $\mu$m is superior in output characteristics to the evaluation cells in the comparative examples 9-1 to 9-4 in which the mode diameter is less than 0.1 $\mu$m.

From the results shown in Table 33, it is clear that the evaluation cell in the embodiment 9-1 in which the mode diameter in the pore diameter distribution of the electrode layer obtained by the mercury porosimetry is in the range of 0.1 $\mu$m to 0.2 $\mu$m is far superior in cycle life characteristics to the evaluation cells in the comparative examples 9-1 to 9-4 in which the mode diameter is less than 0.1 $\mu$m.

On the other hand, in the evaluation cells in the comparative examples 9-1 to 9-4, the mode diameter in the pore diameter distribution of the electrode layer of the electrodes in the comparative examples 9-1 to 9-4 as negative electrodes is less than 0.1 $\mu$m and thus, the electrolytic solution is less likely to penetrate into the negative electrode and as a result, the supply of lithium ions to the electrode layer during charge and discharge cycle is considered to be insufficient. The lithium ions are needed for electrochemical reactions of the active material. In addition, the negative electrode layer in the evaluation cells in the comparative examples 9-1 to 9-4 cracked due to the charge and discharge cycle.

From the results of Production Example 1 series to Production Example 9 series, it is clear that an electrode including an electrode layer containing the particles of the active material containing niobium-titanium composite oxide can implement, by having the mode diameter in a pore diameter distribution of the electrode layer obtained by the mercury porosimetry within a range of 0.1 $\mu$m to 0.2 $\mu$m, a nonaqueous electrolyte battery capable of exhibiting output characteristics and cycle life characteristics superior to those of an electrode whose mode diameter deviates from the range even if a carbon containing layer coating at least a portion of the surfaces of the particles of the active material is present or not, the composition of the niobium-titanium composite oxide is different, an active material other than the niobium-titanium composite oxide is contained, or substituted niobium-titanium composite oxide is contained. On the other hand, from the results of Production Example A for comparison and Production Example B for comparison, it is clear, as described above, that an electrode including an electrode layer containing the particles of the active material without containing niobium-titanium composite oxide cannot obtain an effect of improvements in output characteristics and cycle life characteristics even if the mode diameter in the pore diameter distribution of the electrode layer is within the range of 0.1 $\mu$m to 0.2 $\mu$m or an electrode including an electrode layer in which the mode diameter in the pore diameter distribution is within the range of 0.1 $\mu$m to 0.2 $\mu$m cannot be obtained.

According to at least one of the embodiments and examples described above, an electrode is provided. The electrode includes a current collector and an electrode layer formed on the current collector. The electrode contains particles of an active material containing niobium-titanium composite oxide. A mode diameter in the pore diameter distribution of the electrode layer obtained by the mercury porosimetry is in the range of 0.1 μm to 0.2 μm. The electrode layer can implement both of excellent impregnation of the nonaqueous electrolyte and excellent electric conduction between the particles of the active material and can also prevent both of a blockage of pores and cracks of the electrode layer caused by the repeated charge/discharge. As a result, the electrode can implement a nonaqueous electrolyte battery excellent in input/output characteristics and cycle life characteristics with a large current.

While certain embodiments have been described, these embodiments have been presented by way of example only, and are not intended to limit the scope of the inventions.

**Claims**

1. An electrode (4) comprising:

   a current collector (4a); and
   an electrode layer (4b) formed on the current collector (4a), and comprising an electronic conductive agent and particles of an active material containing niobium-titanium composite oxide, wherein
   the particles of the active material comprise secondary particles in which primary particles of the active material are aggregated,
   an average particle size of the secondary particles measured by a Scanning Electron Microscope (SEM) is within a range of 1 μm to 30 μm, and a mode diameter in a pore diameter distribution of the electrode layer (4b) obtained by mercury porosimetry is within a range of 0.1 μm to 0.2 μm.

2. The electrode (4) according to claim 1, wherein
   an average particle size of the primary particles as measured by Scanning Electron Microscope (SEM) is within a range of 0.1 μm to 10 μm.

3. The electrode (4) according to claim 1 or 2, wherein the niobium-titanium composite oxide is at least one oxide selected from a group consisting of $Nb_2TiO_7$, $Nb_{10}Ti_2O_{29}$, $Nb_{24}TiO_{62}$, $Nb_{14}TiO_{37}$, $Nb_2Ti_2O_9$, and $Na_{1.4}Ti_{1.3}La_{0.3}O_7$.

4. The electrode (4) according to any one of claims 1 to 3, wherein the electrode layer (4b) contains particles of a second active material other than the particles of the active material containing the niobium-titanium composite oxide, and the second active material is at least one material selected from a group consisting of spinel type lithium titanate $Li_4Ti_5O_{12}$, anatase type titanium dioxide, and monoclinic crystal β type titanium dioxide $TiO_2$ (B).

5. The electrode (4) according to claim 4, wherein the particles of the active material containing the niobium-titanium composite oxide occupies 50% or more of a total weight of the particles of the active material containing the niobium-titanium composite oxide and the particles of the second active material.

6. The electrode (4) according to any one of claims 2 to 5, wherein
   the average particle size of the secondary particles as measured by Scanning Electron Microscope (SEM) is within the range of 5 μm to 15 μm and
   the average particle size of the primary particles as measured by Scanning Electron Microscope (SEM) is within the range of 1 μm to 5 μm.

7. The electrode (4) according to any one of claims 1 to 6, wherein the active material is the niobium-titanium composite oxide.

8. The electrode (4) according to claim 7, which comprises a carbon containing layer coating at least a part of surfaces of the particles of the active material.

9. The electrode (4) according to any one of claims 1 to 8, wherein the electrode layer (4b) has a density of 2.4 g/cm$^3$ or more.

10. A nonaqueous electrolyte battery (10) comprising:

the electrode (4) according to any one of claims 1 to 9 as a negative electrode (4);
a positive electrode (3); and
a nonaqueous electrolyte.

11. A battery pack (20) comprising the nonaqueous electrolyte battery (10) according to claim 10.

12. The battery pack (20) according to claim 11, comprising: a plurality of the nonaqueous electrolyte batteries (10), wherein the plurality of nonaqueous electrolyte batteries (10) are electrically connected in series and/or in parallel.

13. The battery pack (20) according to claim 12, further comprising: an energizing terminal (27); a printed wiring board (24); a thermistor (25); an insulating plate; and a protective circuit (26), wherein the plurality of the nonaqueous electrolyte batteries (10) are electrically connected in series.

14. A vehicle comprising the battery pack (20) according to any one of claims 11 to 13.

**Patentansprüche**

1. Elektrode (4), umfassend:

   einen Stromkollektor (4a); und
   eine Elektrodenschicht (4b), die auf dem Stromkollektor (4a) ausgebildet ist und ein elektrisch leitendes Mittel und Partikel eines Aktivmaterials, enthaltend ein Niob-Titan-Kompositoxid, umfasst, wobei
   die Partikel des Aktivmaterials Sekundärpartikel umfassen, in denen Primärpartikel des Aktivmaterials aggregiert sind,
   eine durchschnittliche Partikelgröße der Sekundärpartikel, gemessen mit einem Rasterelektronenmikroskop (SEM), im Bereich von 1 $\mu$m bis 30 $\mu$m liegt, und ein Modendurchmesser in einer Porendurchmesserverteilung der Elektrodenschicht (4b), erhalten durch Quecksilberporosimetrie, im Bereich von 0,1 $\mu$m bis 0,2 $\mu$m liegt.

2. Elektrode (4) gemäß Anspruch 1, wobei eine durchschnittliche Partikelgröße der Primärpartikel, gemessen mit einem Rasterelektronenmikroskop (SEM), im Bereich von 0,1 $\mu$m bis 10 $\mu$m liegt.

3. Elektrode (4) gemäß Anspruch 1 oder 2, wobei das Niob-Titan-Kompositoxid mindestens ein Oxid ist, das aus einer Gruppe ausgewählt ist, die aus $Nb_2TiO_7$, $Nb_{10}Ti_2O_{29}$, $Nb_{24}TiO_{62}$, $Nb_{14}TiO_{37}$, $Nb_2Ti_2O_9$ und $Na_{1.4}Ti_{1.3}La_{0.3}O_7$ besteht.

4. Elektrode (4) gemäß einem der Ansprüche 1 bis 3, wobei die Elektrodenschicht (4b) Partikel eines zweiten Aktivmaterials enthält, die von den Partikeln des Aktivmaterials, enthaltend das Niob-Titan-Kompositoxid, verschieden sind und das zweite Aktivmaterial mindestens ein Material ist, das aus einer Gruppe ausgewählt ist, die aus Lithiumtitanat $Li_4Ti_5O_{12}$ vom Spinell-Typ, Titandioxid vom Anatase-Typ und monoklin kristallines Titandioxid $TiO_2$ vom $\beta$-Typ (B) besteht.

5. Elektrode (4) gemäß Anspruch 4, wobei die Partikel des Aktivmaterials, enthaltend das Niob-Titan-Kompositoxid, 50% oder mehr des Gesamtgewichts der Partikel des Aktivmaterials, enthaltend das Niob-Titan-Kompositoxid, und der Partikel des zweiten Aktivmaterials ausmachen.

6. Elektrode (4) gemäß einem der Ansprüche 2 bis 5, wobei
   die durchschnittliche Partikelgröße der Sekundärpartikel, gemessen mit einem Rasterelektronenmikroskop (SEM), im Bereich von 5 $\mu$m bis 15 $\mu$m liegt und
   die durchschnittliche Partikelgröße der Primärpartikel, gemessen mit einem Rasterelektronenmikroskop (SEM), im Bereich von 1 $\mu$m bis 5 $\mu$m liegt.

7. Elektrode (4) gemäß einem der Ansprüche 1 bis 6, wobei das Aktivmaterial das Niob-Titan-Kompositoxid ist.

8. Elektrode (4) gemäß Anspruch 7, die eine Kohlenstoffhaltige Schicht umfasst, die mindestens einen Teil der Oberfläche der Partikel des Aktivmaterials beschichtet.

9. Elektrode (4) gemäß einem der Ansprüche 1 bis 8, wobei die Elektrodenschicht (4b) eine Dichte von 2,4 g/cm$^3$ oder

mehr aufweist.

**10.** Batterie (10) mit nicht-wässerigem Elektrolyt, umfassend:

die Elektrode (4) gemäß einem der Ansprüche 1 bis 9 als eine negative Elektrode (4);
eine positive Elektrode (3); und
einen nicht-wässrigen Elektrolyt.

**11.** Batteriepack (20), umfassend die Batterie (10) mit nicht-wässerigem Elektrolyt gemäß Anspruch 10.

**12.** Batteriepack (20) gemäß Anspruch 11, umfassend: eine Vielzahl von Batterien (10) mit nicht-wässerigem Elektrolyt, wobei die Vielzahl von Batterien (10) mit nicht-wässerigem Elektrolyt elektrisch in Reihe und/oder parallel geschaltet sind.

**13.** Batteriepack (20) gemäß Anspruch 12, zusätzlich umfassend: einen Energieanschluss (27); eine gedruckte Leiterplatte (24); einen Thermistor (25); eine Isolierplatte; und eine Schutzschaltung (26), wobei die Vielzahl der Batterien (10) mit nicht-wässerigem Elektrolyt elektrisch in Reihe geschaltet sind.

**14.** Fahrzeug, umfassend den Batteriepack (20) gemäß einem der Ansprüche 11 bis 13.

**Revendications**

**1.** Électrode (4) comprenant :

un collecteur de courant (4a) ; et
une couche d'électrode (4b) formée sur le collecteur de courant (4a), et comprenant un agent conducteur électronique et des particules d'un matériau actif contenant de l'oxyde composite de niobium-titane, dans laquelle les particules du matériau actif comprennent des particules secondaires dans lesquelles des particules primaires du matériau actif sont agrégées,
une taille de particules moyenne des particules secondaires mesurée par un Microscope Électronique à Balayage (SEM) est dans une plage de 1 $\mu$m à 30 $\mu$m, et un diamètre de mode dans une distribution de diamètre de pores de la couche d'électrode (4b) obtenu par porosimétrie au mercure est dans une plage de 0,1 $\mu$m à 0,2 $\mu$m.

**2.** Électrode (4) selon la revendication 1, dans laquelle
une taille de particules moyenne des particules primaires telle que mesurée par Microscope Électronique à Balayage (SEM) est dans une plage de 0,1 $\mu$m à 10 $\mu$m.

**3.** Électrode (4) selon la revendication 1 ou 2, dans laquelle l'oxyde composite de niobium-titane est au moins un oxyde sélectionné parmi un groupe consistant en $Nb_2TiO_7$, $Nb_{10}Ti_2O_{29}$, $Nb_{24}TiO_{62}$, $Nb_{14}TiO_{37}$, $Nb_2Ti_2O_9$, et $Na_{1,4}Ti_{1,3}La_{0,3}O_7$.

**4.** Électrode (4) selon l'une quelconque des revendications 1 à 3, dans laquelle la couche d'électrode (4b) contient des particules d'un second matériau actif autre que les particules du matériau actif contenant l'oxyde composite de niobium-titane, et le second matériau actif est au moins un matériau sélectionné parmi un groupe consistant en du titanate de lithium de type spinelle $Li_4Ti_5O_{12}$, du dioxyde de titane de type anatase, et du dioxyde de titane de type $\beta$ de cristal monoclinique $TiO_2$ (B).

**5.** Électrode (4) selon la revendication 4, dans laquelle les particules du matériau actif contenant l'oxyde composite de niobium-titane occupent 50% ou plus d'un poids total des particules du matériau actif contenant l'oxyde composite de niobium-titane et des particules du second matériau actif.

**6.** Électrode (4) selon l'une quelconque des revendications 2 à 5, dans laquelle
la taille de particules moyenne des particules secondaires telle que mesurée par Microscope Électronique à Balayage (SEM) est dans la plage de 5 $\mu$m à 15 $\mu$m et
la taille de particules moyenne des particules primaires telle que mesurée par Microscope Électronique à Balayage (SEM) est dans la plage de 1 $\mu$m à 5 $\mu$m.

**7.** Électrode (4) selon l'une quelconque des revendications 1 à 6, dans laquelle le matériau actif est l'oxyde composite de niobium-titane.

**8.** Électrode (4) selon la revendication 7, qui comprend une couche contenant du carbone revêtant au moins une partie de surfaces des particules du matériau actif.

**9.** Électrode (4) selon l'une quelconque des revendications 1 à 8, dans laquelle la couche d'électrode (4b) a une densité de 2,4 g/cm$^3$ ou plus.

**10.** Batterie à électrolyte non aqueux (10) comprenant :

l'électrode (4) selon l'une quelconque des revendications 1 à 9 en tant qu'électrode négative (4) ;
une électrode positive (3) ; et
un électrolyte non aqueux.

**11.** Bloc-batterie (20) comprenant la batterie à électrolyte non aqueux (10) selon la revendication 10.

**12.** Bloc-batterie (20) selon la revendication 11, comprenant : une pluralité des batteries à électrolyte non aqueux (10), dans lequel la pluralité de batteries à électrolyte non aqueux (10) sont connectées électriquement en série et/ou en parallèle.

**13.** Bloc-batterie (20) selon la revendication 12, comprenant en outre : une borne énergisante (27) ; une carte de circuit imprimé (24) ; une thermistance (25) ; une plaque isolante ; et un circuit de protection (26), dans lequel la pluralité des batteries à électrolyte non aqueux (10) sont connectées électriquement en série.

**14.** Véhicule comprenant le bloc-batterie (20) selon l'une quelconque des revendications 11 à 13.

F I G. 1

F I G. 2

FIG. 3

FIG. 4

FIG. 5

FIG. 6

FIG.7

F I G. 8

F I G. 9

F I G. 10

F I G. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2014120404 A1

- US 2008166637 A1

### Non-patent literature cited in the description

- **GENJI JIMBO et al.** BIRYU SHI HANDO BUKKU (Fine Particle Handbook). Asakura Publishing, 1991

- HUNTAI BUSSEI SOKUTEI HO (Powder Properties Measuring Method). Asakura Publishing, 1978